# EUROPÄISCHE PATENTSCHRIFT

(11) **EP 2 652 584 B1**
(45) Veröffentlichungstag und Bekanntmachung des Hinweises auf die Patenterteilung: **18.02.2015**
(21) Anmeldenummer: 11805435.2
(22) Anmeldetag: 06.12.2011
(51) Int. Cl.: G06F 3/048

(54) **SYSTEM MIT GESTENERKENNUNGSEINHEIT**
SYSTEM WITH GESTURE IDENTIFICATION UNIT
SYSTÈME POURVU D'UNE UNITÉ DE RECONNAISSANCE DE GESTES

(30) Priorität: 17.12.2010 DE 102010054859
(43) Veröffentlichungstag der Anmeldung: 23.10.2013
(73) Patentinhaber: Rohde & Schwarz GmbH & Co. KG, 81671 München (DE)
(72) Erfinder: HEINRICH, Karl-Ludwig, 81541 München (DE)
(74) Vertreter: Körfer, Thomas
(86) Internationale Anmeldenummer: PCT/EP2011/071850
(87) Internationale Veröffentlichungsnummer: WO 2012/080029

(56) Entgegenhaltungen:
- US-A1- 2007 177 803

## Beschreibung

Die Erfindung betrifft ein System, insbesondere ein Messsystem, mit einem Berührungsbildschirm (engl. touch screen), sowie ein Verfahren zum Betreiben eines Systems, insbesondere eines Messsystems, mit einem Berührungsbildschirm.

Verarbeitungs-Systeme, insbesondere Messsysteme, gewinnen in jeder Produktgeneration deutlich an Funktionalität hinzu. Dabei werden nicht selten Multifunktionsgeräte geschaffen, die Prüflinge mit unterschiedlichen Standards vermessen können. Die notwendige Bediensoftware wird bei einer erhöhten Funktionalität ebenfalls umfangreicher. Um stark verschachtelte Benutzermenüs zu vermeiden und eine effiziente Bedienung durch direkte Funktionsaufrufe zu erreichen, werden an dem Gerät selbst verschiedene Taster und Drehknöpfe angebracht. Allerdings ist der Platz auf der Bedienoberfläche beschränkt und zu viele und/oder zu weit von dem Bildschirm beabstandete Taster und Drehknöpfe führen dazu, dass der Bedienkomfort für den Benutzer signifikant nachlässt. Aus diesem Grund wird dazu übergegangen, viele Benutzereingaben mit Hilfe eines Berührungsbildschirms entgegenzunehmen.

Aus der EP 2 059 868 B1 ist eine tragbare elektronische Vorrichtung, wie zum Beispiel ein Mobiltelefon bekannt, bei dem herkömmliche Benutzerschnittstellen, wie beispielsweise Drucktasten, durch einen berührungsempfindlichen Bildschirm ersetzt sind. Die auszuführende Anwendung visualisiert Schaltflächen, die von dem Benutzer durch den berührungsempfindlichen Bildschirm betätigt werden können. Nachteilig an der EP 2 059 868 B1 ist, dass einzig nur dargestellte Elemente betätigt werden können, bzw. dass nur einfache Befehle, wie zum Beispiel das Scrollen des Bildschirms über den berührungsempfindlichen Bildschirm an die tragbare elektronische Vorrichtung übertragen werden können.

Die US 2007/0177803 A1 beschreibt ein Gestenwörterbuch, welches Gesten beinhaltet, die ein Benutzer auf einem berührungsempfindlichen Bildschirm zeichnen kann. Je nach erkannter Geste werden verschiedene Anwendungen gestartet. Sobald ein Teil einer Geste erkannt wird, werden dem Benutzer Vorschläge unterbreitet, wie diese Geste fortgesetzt werden kann. Dem Benutzer ist es dabei ebenfalls erlaubt, die zu startende Anwendung von bereits vorhandenen Gesten zu ändern oder dem Gestenwörterbuch neue Gesten hinzuzufügen.

Es ist daher die Aufgabe des erfindungsgemäßen Systems und des erfindungsgemäßen Verfahrens zum Betreiben des Systems, eine Benutzerschnittstelle zu schaffen, die es ermöglicht, dass auch komplexe Befehle über einen Berührungsbildschirm intuitiver als bisher, bzw. in einfacher und konsistenter Art und Weise eingegeben werden können, sodass dadurch die Menüstruktur verschlankt werden kann, bzw. dass nur eine Mindestanzahl an Drehknöpfen oder Tastern für die Bedienung des Systems vorgehalten werden müssen.

Die Aufgabe wird bezüglich des Systems durch die Merkmale des Anspruchs 32 und bezüglich des Verfahrens zum Betreiben des Systems durch die Merkmale des Anspruchs 1 gelöst. Der Anspruch 30 beinhaltet ein Computerprogramm mit Programmcode-Mitteln, um sämtliche Verfahrensschritte ausführen zu können, wenn das Programm auf einem Computer oder einem digitalen Signalprozessor ausgeführt wird. Der Anspruch 31 enthält ein Computerprogramm-Produkt mit insbesondere auf einen maschinenlesbaren Träger gespeicherten Programmcode-Mitteln, um alle Verfahrensschritte durchführen zu können, wenn das Programm auf einem Computer oder einem digitalen Signalprozessor ausgeführt wird. In den jeweiligen Unteransprüchen sind vorteilhafte Weiterbildungen des erfindungsgemäßen Systems sowie des erfindungsgemäßen Verfahrens zum Betreiben des Systems mit einem Berührungsbildschirm angegeben.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Ausführungsbeispiel eines Messsystems auf dem das erfindungsgemäße Verfahren implementiert ist;
- Fig. 2: ein Ausführungsbeispiel eines Blockschaltbilds des erfindungsgemäßen Systems;
- Fig. 3A: ein Ausführungsbeispiel eines Flussdiagramms eines erfindungsgemäßen Verfahrens zum Betreiben eines Systems mit einem Berührungsbildschirm;
- Fig. 3B: ein weiteres Ausführungsbeispiel eines Flussdiagramms des erfindungsgemäßen Verfahrens zum Betreiben eines Systems mit einem Berührungsbildschirm;
- Fig. 4A: eine Hand mit Fingern, die zur Erläuterung der Notation für die Gesten dient;
- Fig. 4B: ein Ausführungsbeispiel das zum Erläutern der Notation für die Gesten dient;
- Fig. 4C: ein weiteres Ausführungsbeispiel das zum Erläutern der Notation für die Gesten dient;
- Fig. 4D: ein weiteres Ausführungsbeispiel das zum Erläutern der Notation für die Gesten dient;
- Fig. 4E: ein weiteres Ausführungsbeispiel das zum Erläutern der Notation für die Gesten dient;
- Fig. 4F: ein weiteres Ausführungsbeispiel das zum Erläutern der Notation für die Gesten dient;
- Fig. 4G: ein weiteres Ausführungsbeispiel das zum Erläutern der Notation für die Gesten dient;
- Fig. 4H: ein weiteres Ausführungsbeispiel das zum Erläutern der Notation für die Gesten dient;
- Fig. 4I: ein weiteres Ausführungsbeispiel das zum Erläutern der Notation für die Gesten dient;
- Fig. 4J: ein weiteres Ausführungsbeispiel das zum Erläutern der Notation für die Gesten dient;
- Fig. 5: ein Ausführungsbeispiel einer erfindungsgemäßen Geste;
- Fig. 6A: ein weiteres Ausführungsbeispiel einer Geste;
- Fig. 6B: ein weiteres Ausführungsbeispiel einer Geste;
- Fig. 6C: ein weiteres Ausführungsbeispiel einer Geste;
- Fig. 7: ein weiteres Ausführungsbeispiel einer Geste;
- Fig. 8: ein weiteres Ausführungsbeispiel einer Geste, die eine diploide Bewegung beinhaltet;
- Fig. 9: ein weiteres Ausführungsbeispiel einer Geste, die eine triploide Bewegung beinhaltet;
- Fig. 10A: ein weiteres Ausführungsbeispiel einer Geste, die zwei triploide Bewegungen beinhaltet;
- Fig. 10B: ein weiteres Ausführungsbeispiel einer Geste, die eine diploide Bewegung beinhaltet;
- Fig. 11A: ein weiteres Ausführungsbeispiel einer Geste;
- Fig. 11B: ein weiteres Ausführungsbeispiel einer Geste, die ein Klicken beinhaltet;
- Fig. 12: ein weiteres Ausführungsbeispiel einer Geste;
- Fig. 13: ein weiteres Ausführungsbeispiel einer Geste;
- Fig. 14: ein weiteres Ausführungsbeispiel einer Geste, die eine diploide Bewegung beinhaltet;
- Fig. 15: ein weiteres Ausführungsbeispiel einer Geste;
- Fig. 16: ein weiteres Ausführungsbeispiel einer Geste;
- Fig. 17: ein weiteres Ausführungsbeispiel einer Geste;
- Fig. 18A: ein weiteres Ausführungsbeispiel einer Geste, die zwei Bewegungen beinhaltet;
- Fig. 18B: ein weiteres Ausführungsbeispiel einer Geste, die eine mehrfache horizontale Strichbewegung beinhaltet;
- Fig. 19A: ein weiteres Ausführungsbeispiel einer Geste;
- Fig. 19B: ein weiteres Ausführungsbeispiel einer Geste;
- Fig. 20: ein weiteres Ausführungsbeispiel einer Geste, die zwei Bewegungen beinhaltet;
- Fig. 21A: ein weiteres Ausführungsbeispiel einer Geste, die zwei Bewegungen beinhaltet;
- Fig. 21B: ein weiteres Ausführungsbeispiel einer Geste;
- Fig. 21C: ein weiteres Ausführungsbeispiel einer Geste;
- Fig. 22A: ein weiteres Ausführungsbeispiel einer Geste;
- Fig. 22B: ein weiteres Ausführungsbeispiel einer Geste;
- Fig. 22C: ein weiteres Ausführungsbeispiel einer Geste, die ein Klicken beinhaltet;
- Fig. 22D: ein weiteres Ausführungsbeispiel einer Geste;
- Fig. 23A: ein weiteres Ausführungsbeispiel einer Geste;
- Fig. 23B: ein weiteres Ausführungsbeispiel einer Geste, die ein Klicken beinhaltet;
- Fig. 24: ein weiteres Ausführungsbeispiel einer Geste;
- Fig. 25: ein weiteres Ausführungsbeispiel einer Geste;
- Fig. 26: ein weiteres Ausführungsbeispiel einer Geste;
- Fig. 27: ein weiteres Ausführungsbeispiel einer Geste, die eine diploide Bewegung beinhaltet;
- Fig. 28A: ein weiteres Ausführungsbeispiel einer Geste, die zwei diploide Bewegungen beinhaltet;
- Fig. 28B: ein weiteres Ausführungsbeispiel einer Geste;
- Fig. 29A: ein weiteres Ausführungsbeispiel einer Geste;
- Fig. 29B: ein weiteres Ausführungsbeispiel einer Geste;
- Fig. 29C: ein weiteres Ausführungsbeispiel einer Geste;
- Fig. 30: ein weiteres Ausführungsbeispiel einer Geste;
- Fig. 31A: ein weiteres Ausführungsbeispiel einer Geste;
- Fig. 31B: ein weiteres Ausführungsbeispiel einer Geste;
- Fig. 32A: ein weiteres Ausführungsbeispiel einer erfindungsgemäßen Geste;
- Fig. 32B: ein weiteres Ausführungsbeispiel einer erfindungsgemäßen Geste, die eine diploide Bewegung beinhaltet;
- Fig. 32C: ein weiteres Ausführungsbeispiel einer erfindungsgemäßen Geste, die eine triploide Bewegung beinhaltet;
- Fig. 32D: ein weiteres Ausführungsbeispiel einer erfindungsgemäßen Geste, die eine tetraploide Bewegung beinhaltet;
- Fig. 32E: ein weiteres Ausführungsbeispiel einer erfindungsgemäßen Geste, die eine vertikal diploide Bewegung beinhaltet; und
- Fig. 32F: ein weiteres Ausführungsbeispiel einer erfindungsgemäßen Geste, die eine gehäufelt triploide Bewegung beinhaltet.

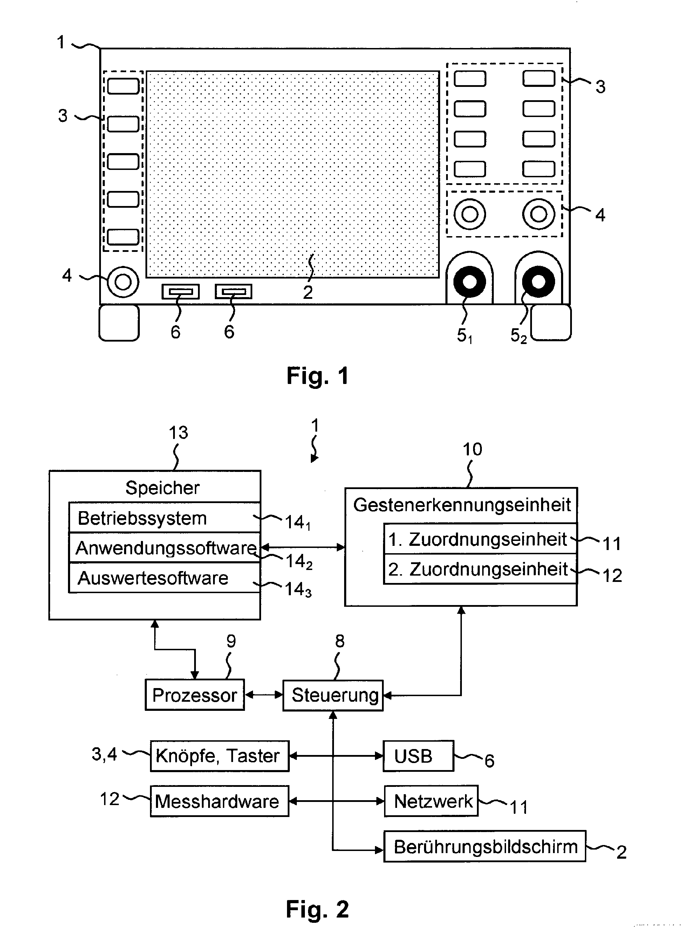

Fig. 1 zeigt ein Ausführungsbeispiel eines erfindungsgemäßen Systems 1, bei dem es sich insbesondere um ein Messsystem 1 handelt. Das Messsystem 1 weist einen Berührungsbildschirm 2 auf, der beispielsweise einen resistiven, und/oder kapazitiven, und/oder induktiven Aufbau haben kann, wobei auch andere Arten eines Berührungsbildschirms 2 für das Messsystem 1 verwendet werden können. Das dargestellte Messsystem 1 besitzt außerdem noch mehrere Taster 3 und Drehknöpfe 4. Diese können beispielsweise mit unterschiedlichen Farben beleuchtet sein und dienen dazu, dass der Benutzer grundlegende Einstellungen des Messsystems 1 möglichst schnell und direkt vornehmen kann. Das Messsystem 1 verfügt noch über Eingangsanschlüsse 5₁, 5₂ die dazu dienen, ein oder mehrere Messsignale der nicht dargestellten Messelektronik 12 zuzuführen. Weiterhin weist das Messsystem 1 noch Anschlüsse auf, um zusätzliche Peripherie anschließen zu können. Bei diesen Anschlüssen kann es sich beispielsweise um USB-Anschlüsse 6 (engl. universal serial bus; dt. universeller serieller Bus) handeln.

Messsysteme 1 die für viele unterschiedliche Messverfahren geschaffen sind, weisen meist eine komplexe Benutzermenüstruktur auf, die viele Ebenen umfasst und stark verschachtelt sein kann. Damit der Benutzer die Einstellungen möglichst einfach vornehmen kann, sind eine Vielzahl von Tastern 3 und Drehknöpfen 4 am Gerät angebracht. Aufgrund der meist vorgegebenen Abmessungen eines solchen Messsystems bleibt für die Darstellung der Messergebnisse an der Gehäusefront zum Teil nur wenig Platz. Größere Berührungsbildschirme 2 bieten einen immensen Vorteil, denn sie erlauben höhere Auflösungen, sodass beispielsweise mehrere Perioden eines Signals angezeigt werden können. Weil viele Taster 3 und Drehknöpfe 4 eingespart werden können, bzw. müssen, wobei gleichzeitig die Bedienung möglichst einfach gehalten werden soll, muss es dem Benutzer möglich sein, direkt verschiedene Funktionen auszuführen, ohne sich dabei durch umfangreiche Kontextmenüs arbeiten zu müssen. Zusätzliche Taster 3 und Drehknöpfe 4 können dabei auf dem Berührungsbildschirm 2 visualisiert werden. Ein solches Messsystem 1 ist in Fig. 1 dargestellt. Das Ziel wird dadurch erreicht, dass es sich bei dem Berührungsbildschirm 2 um einen Berührungsbildschirm 2 handelt, der mehrere Berührungen zur selben Zeit erfassen kann. Verschiedene Funktionen, die in bisherigen Messsystemen durch Betätigen verschiedener separater Taster 3 und Drehknöpfe 4 gestartet werden konnten, werden bei dem erfindungsgemäßen Messsystem 1 über verschiedene Gesten aufgerufen.

Unter Gesten sind dabei Berührungen und/oder Bewegungen von einem oder mehreren physikalischen Objekten auf und/oder in der Nähe des Berührungsbildschirms 2 zu verstehen. Bei den physikalischen Objekten handelt es sich beispielsweise um die Finger 20₁, 20₂, 20₃, 20₄, 20₅ einer Hand oder um Eingabestifte. Die einzelnen Gesten sollen sich dabei derart voneinander unterscheiden, dass diese sicher erkannt werden können, ohne dass der Benutzer das Messsystem 1 "trainieren" muss. Die Gesten sollen ebenfalls konsistent zueinander und insgesamt intuitiv definiert sein. Beispielsweise wird ein gezeichnetes Andreaskreuz von einem Benutzer damit assoziiert, dass eine laufende Operation abgebrochen werden oder eine Datei gelöscht werden soll. Die in dem Messsystem 1 verwendeten Gesten sollen ebenfalls gleichermaßen für Rechtshänder, als auch für Linkshänder verwendbar sein.

Fig. 2 zeigt ein Ausführungsbeispiel eines Blockschaltbilds des erfindungsgemäßen Systems 1, bzw. Messsystems 1. Das Messsystem 1 weist einen Berührungsbildschirm 2, eine Steuereinheit 8, eine zentrale Verarbeitungseinheit 9 und eine Gestenerkennungseinheit 10 auf. Bei der zentralen Verarbeitungseinheit kann es sich um Prozessoren und/oder FPGAs (engl. field programmable gate array; dt. feldprogrammierbare Gatter-Anordnung) handeln. Der Berührungsbildschirm 2 ist mit der Steuereinheit 8 über eine bekannte Schnittstelle, wie zum Beispiel eine serielle Schnittstelle verbunden. Die zentrale Verarbeitungseinheit 9 ist ebenfalls mit der Steuereinheit 8 über bekannte Schnittstellen verbunden. Die Steuereinheit 8 ist auch mit der Gestenerkennungseinheit 10 über eine Schnittstelle verbunden. Weiterhin sind noch Taster 3 und/oder Drehknöpfe 4, USB-Anschlüsse 6, Netzwerkanschlüsse 11, sowie eine Messelektronik 12 über bekannte Schnittstellen mit der Steuereinheit 8 verbunden. Bei bekannten Schnittstellen handelt es sich beispielsweise um USB-Schnittstellen, PCI-Schnittstellen (engl. peripheral component interconnect; dt. dezentrale Bauteilverbindung), PCIe-Schnittstellen (engl. PCI-Express; dt. PCI-Express), serielle Schnittstellen, bzw. insgesamt um Schnittstellen, die eine Datenübertragung erlauben.

Die Steuereinheit 8 erkennt eine Position von einem oder mehreren physikalischen Objekten auf und/oder in der Nähe des Berührungsbildschirms 2. Dabei ist zu verstehen, dass die Steuereinheit beispielsweise die Position der einzelnen Finger 20₁, 20₂, 20₃, 20₄, 20₅ erkennt, die auf den Berührungsbildschirm 2 aufgelegt sind. Die Steuereinheit 8 erkennt ebenfalls eine Bewegung von einem oder mehreren physikalischen Objekten auf und/oder in der Nähe des Berührungsbildschirms 2. Beispielsweise können dadurch die Bewegungen der einzelnen Finger 20₁, 20₂, 20₃, 20₄, 20₅ erfasst werden, die auf dem Berührungsbildschirm 2 entlang streichen. Je nach Art des Berührungsbildschirms 2 muss das physikalische Objekt nicht direkt den Berührungsbildschirm 2 berühren. Es kann auch ausreichend sein, dass das physikalische Objekt sich in der Nähe des Berührungsbildschirms 2 befindet, wobei der Abstand des physikalischen Objekts zu dem Berührungsbildschirm 2 in diesem Fall nicht größer als wenige Millimeter sein darf.

Die Steuereinheit 8 erfasst dabei die einzelnen Bereiche auf dem Berührungsbildschirm 2, die durch das eine oder die mehreren physikalischen Objekte berührt werden, bzw. die einzelnen Bereiche auf dem Berührungsbildschirm 2, über die die einen oder mehreren physikalischen Objekte bewegt werden. Die Bereiche können den entsprechenden darunterliegenden Pixeln zugeordnet werden. Die Steuereinheit 8 berechnet aus diesen Informationen ebenfalls die Lage der berührten Pixel zueinander. Beispielsweise ist es für das erfolgreiche Betätigen einer Schaltfläche, die auf dem Berührungsbildschirm 2 dargestellt wird, erforderlich, dass die absolute Lage der berührten Pixel erfasst wird, um zu überprüfen, welche Schaltflächen auf dem gleichen Bereich dargestellt sind, der von dem einen oder den mehreren physikalischen Objekten berührt wird. Andererseits ist es für das Erkennen von Gesten nicht unbedingt wichtig, in welchem Bereich des Berührungsbildschirms 2 diese gezeichnet sind, sondern es ist vielmehr von Bedeutung wie die einzelnen Berührungen bzw. Bewegungen zueinander erfolgen. Diese Informationen können durch die Steuereinheit 8 bzw. durch die zentrale Verarbeitungseinheit 9 berechnet werden. Bei der zentralen Verarbeitungseinheit 9 handelt es sich meistens um einen Prozessor. Anschließend werden die erkannte Position, bzw. die erkannte Bewegung von der Steuereinheit 8 an die Gestenerkennungseinheit 10 übertragen und dort ausgewertet.

Hierfür weist die Gestenerkennungseinheit 10 eine erste Zuordnungseinheit 11 und eine zweite Zuordnungseinheit 12 auf. Die erste Zuordnungseinheit 11 empfängt von der Steuereinheit 8 die Position und/oder die Bewegung von einem oder mehreren physikalischen Objekten auf und/oder in der Nähe des Berührungsbildschirms 2. Dabei werden der ersten Zuordnungseinheit 11 die Position und/oder die Bewegung in Bezug auf die betroffenen Pixel, als auch in Relation zueinander übergeben. Die erste Zuordnungseinheit 11 ordnet die Position und/oder die Bewegung von einem oder mehreren physikalischen Objekten zu einer Geste innerhalb eines Gestensets zu. Ein Gestenset beinhaltet dabei eine Vielzahl von Gesten. Besonders vorteilhaft ist es, wenn sich die einzelnen Gesten eines Gestensets stark voneinander unterscheiden, sodass sich auch die gezeichneten Gesten von unerfahrenen Benutzern eindeutig einer hinterlegten Geste innerhalb eines Gestensets zuordnen lassen. Eine Geste selbst kann eine Vielzahl von Teilgesten umfassen, wobei die Teilgesten mit denselben oder verschiedenen physikalischen Objekten gezeichnet sind, bzw. wobei die einzelnen Teilgesten zeitlich beabstandet voneinander gezeichnet werden können. Eine Teilgeste wird meist durch die Bewegung von genau einem physikalischen Objekt gezeichnet.

Sobald die erste Zuordnungseinheit 11 eine Geste erkannt hat, übermittelt sie diese an die zweite Zuordnungseinheit 12, die ebenfalls innerhalb der Gestenerkennungseinheit 10 ausgebildet ist. Die zweite Zuordnungseinheit 12 übergibt eine für die erkannte Geste hinterlegte Tastenkombination oder eine Folge von Tastenkombinationen an eine Anwendung 14₁, 14₂, 14₃. Die zweite Zuordnungseinheit 12 kann außerdem auch eine bestimmte Funktion innerhalb einer Anwendung 14₁, 14₂, 14₃ je nach Art der erkannten Geste ausführen. Die zweite Zuordnungseinheit 12 kann ebenfalls die erkannte Geste an die Anwendung 14₁, 14₂, 14₃ übergeben.

Für den Fall, dass für jede Geste innerhalb eines Gestensets eine bestimmte Tastenkombination oder eine Folge von Tastenkombinationen hinterlegt ist, können auch ältere Anwendungen 14₁, 14₂, 14₃, die von dem erfindungsgemäßen Messsystem 1 ausgeführt werden, von einem Benutzer deutlich einfacher benutzt werden. Dies erlaubt außerdem, dass solche Anwendungen automatisiert werden können, indem eine bestimmte Folge von Tastenkombinationen an diese übergeben werden. Bei den Tastenkombinationen kann es sich beispielsweise um die Strg-Taste (Steuerungs-Taste, bzw. Control-Taste) und die S-Taste handeln, die sonst gleichzeitig gedrückt werden, um einen bestimmten Inhalt zu speichern. Die zweite Zuordnungseinheit 12 beinhaltet hierfür eine Tabelle, in der die einzelnen Gesten gespeichert sind und in der zu jeder Geste eine Tastenkombination oder eine Folge von Tastenkombinationen hinterlegt sind.
Innerhalb der nicht dargestellten Tabelle ist ebenfalls die Anwendung 14₁, 14₂, 14₃ hinterlegt, an die die entsprechende Tastenkombination oder die Folge von Tastenkombinationen für eine erkannte Geste übergeben werden soll. Bei einer Folge von Tastenkombinationen werden die einzelnen Tastenkombinationen nacheinander an die entsprechende Anwendung 14₁, 14₂, 14₃ übergeben, sodass gerade bei älteren Anwendungen 14₁, 14₂, 14₃ das umständliche Navigieren durch komplexe Kontextmenüs stark vereinfacht werden kann. Die Zeitdauer zwischen der Übergabe der einzelnen Tastenkombinationen kann dabei frei eingestellt werden. Innerhalb der Tabelle können neben Tastenkombinationen auch Klicks an bestimmten Stellen des Berührungsbildschirms 2 gespeichert werden. Dies erlaubt beispielsweise das vollautomatische Bestätigen von Dialogboxen, um dadurch die Messzeiten zu verkürzen. Aufgrund der erfindungsgemäßen Steuerung mittels Gesten können sämtliche Anwendungen zu einem hohen Grad über den Berührungsbildschirm 2 automatisiert werden.

Weiterhin ist es besonders vorteilhaft, dass die zweite Zuordnungseinheit 12 eine bestimmte Funktion innerhalb einer Anwendung 14₁, 14₂, 14₃ ausführt bzw. startet, sobald eine bestimmte Geste erkannt wird. Bei den Anwendungen 14₁, 14₂, 14₃, deren Funktionsaufrufe bekannt sind, kann dadurch auf besonders einfache Art und Weise der Bedienkomfort erhöht werden. In einer nicht dargestellten Tabelle sind zu jeder Geste innerhalb des Gestensets Funktionsaufrufe angegeben, die bei Erkennen der entsprechenden Geste durch die zweite Zuordnungseinheit 12 ausgeführt werden. In der Tabelle selbst können auch noch Parameter hinterlegt sein, die den entsprechenden Funktionen beim Aufruf übergeben werden. Durch die verschiedenen Möglichkeiten, wie auf das Erkennen von Gesten reagiert werden kann, wird sichergestellt, dass auch ältere Anwendungen 14₁, 14₂, 14₃ durch den Wegfall von Tastern 3 bzw. Drehknöpfen 4 ohne Einschränkung ihrer Funktionalität auf dem neuen erfindungsgemäßen Messsystem 1 weiterhin ausgeführt werden können.
Schlussendlich ist es besonders vorteilhaft, wenn die zweite Zuordnungseinheit 12 die erkannte Geste direkt an eine Anwendung 14₁, 14₂, 14₃ übergibt. In diesem Fall kann die erkannte Geste direkt innerhalb der Anwendung 14₁, 14₂, 14₃ weiterverarbeitet werden, wodurch die Abstraktion weiter erhöht wird. Dieser Fall kommt gerade bei neu entwickelten Anwendungen 14₁, 14₂, 14₃ in Betracht. Dabei kann für die erkannte Geste ein Objekt erzeugt werden, welches Attribute besitzt, in denen beispielsweise das erkannte Schriftzeichen, bzw. der Name der Geste gespeichert ist, sowie ein Hinweis darauf, ob dieses Schriftzeichen mehrfach-ploide gezeichnet wurde, bzw. die Wahrscheinlichkeit, dass das Schriftzeichen richtig erkannt wurde, bzw. die Zeitdauer, in welcher das Schriftzeichen gezeichnet wurde, usw. Ein solches Objekt mit einer Vielzahl an Attributen kann anschließend einer Funktion innerhalb der entsprechenden Anwendung 14₁, 14₂, 14₃ übergeben werden, die dieses weiterverarbeitet. Es ist ebenfalls möglich, dass für alle Gesten eine Aufzählung (engl. enumeration; kurz: enum) definiert ist, und dass für die erkannte Geste einzig der entsprechende Aufzählungswert an die Anwendung 14₁, 14₂, 14₃ übergeben wird.

Die zweite Zuordnungseinheit 12 kann auch unterschiedliche Anwendungen 14₁, 14₂, 14₃ je nach erkannter Geste steuern. Falls eine erste Geste erkannt wird, kann an eine erste Anwendung 14₁, 14₂, 14₃ eine hinterlegte Tastenkombination oder eine Folge von Tastenkombinationen übergeben werden, wohingegen bei Erkennen einer zweiten Geste bei einer anderen Anwendung 14₁, 14₂, 14₃ direkt eine Funktion innerhalb dieser durch die zweite Zuordnungseinheit 12 ausgeführt wird und wohingegen bei Erkennen einer dritten Geste, diese einer weiteren Anwendung 14₁, 14₂, 14₃ durch die zweite Zuordnungseinheit 12 übergeben wird. Es ist auch möglich, dass an zwei oder mehr Anwendungen 14₁, 14₂, 14₃ eine für jede Geste hinterlegte Tastenkombination oder eine Folge von Tastenkombinationen an die Anwendungen 14₁, 14₂, 14₃ übergeben werden. Selbiges gilt für den Aufruf von Funktionen innerhalb einer Anwendung 14₁, 14₂, 14₃ durch die zweite Zuordnungseinheit 12 oder für das Übergeben der entsprechenden Geste durch die zweite Zuordnungseinheit 12 an die jeweiligen Anwendungen 14₁, 14₂, 14₃.

Das erfindungsgemäße Messsystem 1 verfügt weiterhin noch über eine Speichereinheit 13. Bei dieser Speichereinheit 13 kann es sich zum Beispiel um Arbeitsspeicher und/oder um Festplattenspeicher handeln. Die Speichereinheit 13 ist mit der zentralen Verarbeitungseinheit 9 verbunden. Die zentrale Verarbeitungseinheit 9 verwaltet dabei die Speichereinheit 13. Verschiedene Teile der Speichereinheit 13 werden von unterschiedlichen Anwendungen 14₁, 14₂, 14₃ verwendet, die allesamt von der zentralen Verarbeitungseinheit 9 ausgeführt werden. Bei den Anwendungen 14₁, 14₂, 14₃ kann es sich beispielsweise um das Betriebssystem 14₁ für das erfindungsgemäße Messsystem 1 und/oder um die Anwendungssoftware 14₂, auch Messsoftware 14₂ genannt für das erfindungsgemäße Messsystem 1 und/oder um die Auswertesoftware 14₃ für das erfindungsgemäße Messsystem 1 handeln. Die Gestenerkennungseinheit 10 ist ebenfalls mit der Speichereinheit 13 verbunden, sodass die zweite Zuordnungseinheit 12 innerhalb der Gestenerkennungseinheit 10 auf die in der Speichereinheit 13 gespeicherten Anwendungen 14₁, 14₂, 14₃ in zuvor beschriebener Weise zugreifen kann. Bei den dargestellten Anwendungen 14₁, 14₂, 14₃ handelt es sich nur um exemplarisch herausgegriffene Anwendungen 14₁, 14₂, 14₃. Neben diesen Anwendungen 14₁, 14₂, 14₃ können noch weitere in dem Ausführungsbespiel aus Fig. 2 nicht dargestellte Anwendungen ausgeführt werden.

Es ist ebenfalls möglich, dass weitere Gesten zu dem Gestenset innerhalb der Gestenerkennungseinheit 10 hinzugefügt werden können, indem die Position und/oder die Bewegung von einem oder mehreren physikalischen Objekten auf und/oder in der Nähe des Berührungsbildschirms 2 durch die Steuereinheit 8 erkannt wird. Ein Benutzer kann beispielsweise unter Zuhilfenahme eines oder mehrerer Eingabestifte bzw. Finger 20₁, 20₂, 20₃, 20₄, 20₅ eine Geste, die aus Berührungen und/oder Bewegungen besteht, auf den Berührungsbildschirm 2 zeichnen, wobei diese innerhalb der ersten Zuordnungseinheit 11 gespeichert wird. Anschließend kann festgelegt werden, welche Aktionen beim Erkennen dieser Geste gestartet werden sollen. Bei den Aktionen kann es sich, wie beschrieben, um Tastenkombinationen oder eine Folge von Tastenkombinationen handeln, die an eine Anwendung 14₁, 14₂, 14₃ übertragen werden und/oder es kann festgelegt werden, welche Funktion innerhalb einer Anwendung 14₁, 14₂, 14₃ durch die zweite Zuordnungseinheit 12 ausgeführt werden soll und/oder es kann festgelegt werden, dass die neue Geste durch die zweite Zuordnungseinheit 12 an eine Anwendung 14₁, 14₂, 14₃ übertragen werden soll.

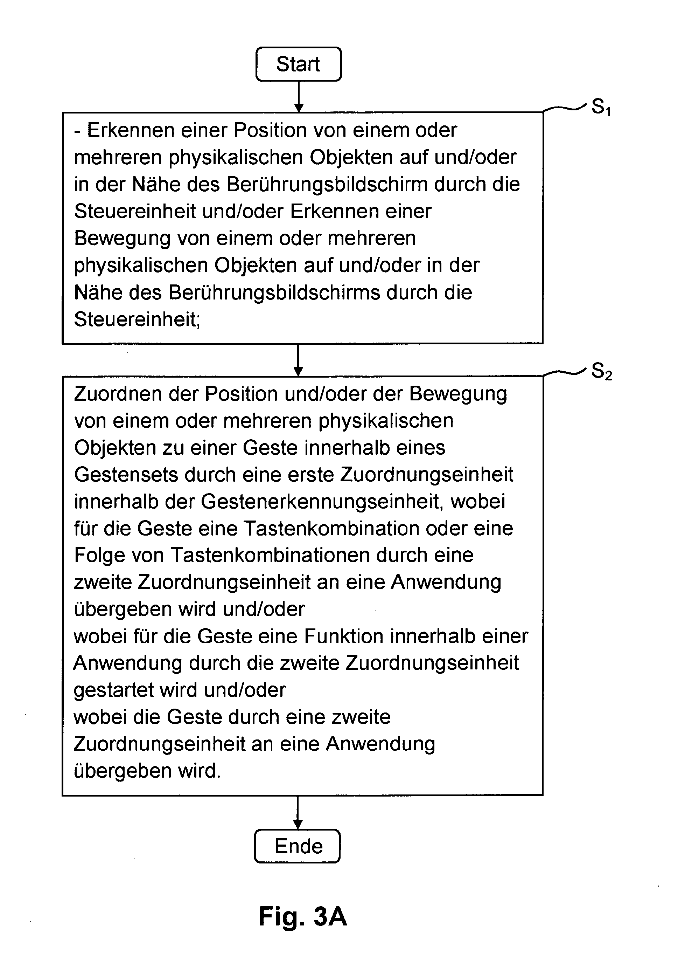

In Fig. 3A ist ein Ausführungsbeispiel über das erfindungsgemäße Verfahren zum Betreiben eines Systems 1 mit einem Berührungsbildschirm 2 dargestellt. Das Verfahren zum Betreiben eines Systems 1, insbesondere eines Messsystems 1 mit einem Berührungsbildschirm 2, einer Steuereinheit 8 für den Berührungsbildschirm 2, einer zentralen Verarbeitungseinheit 9 und einer Gestenerkennungseinheit 10 weist mehrere Verfahrensschritte auf. Die zentrale Verarbeitungseinheit 9 ist wie die Gestenerkennungseinheit 10 und der Berührungsbildschirm 2 mit der Steuereinheit 8 über bekannte Schnittstellen verbunden.

In einem ersten Verfahrensschritt S₁ wird eine Position von einem oder mehreren physikalischen Objekten auf und/oder in der Nähe des Berührungsbildschirms 2 durch die Steuereinheit 8 erkannt und/oder es wird eine Bewegung von einem oder mehreren physikalischen Objekten auf und/oder in der Nähe des Berührungsbildschirms 2 durch die Steuereinheit 8 erkannt. Der Wortlaut "Position" wird sinngemäß für eine Berührung der Bildschirmeinheit 2 durch ein oder mehrere physikalische Objekte gebraucht. Unter dem Wortlaut "Bewegung" ist zu verstehen, dass ein oder mehrere physikalische Objekte auf und/oder in der Nähe des Berührungsbildschirms 2 über diesen streichen, es sich also um eine bewegende Berührung handelt. Ein Klicken oder Drücken auf den Berührungsbildschirm 2 kann dabei unter den Wortlaut "Berührung" fallen.

In einem zweiten Verfahrensschritt S₂ wird die von der Steuereinheit 8 erkannte Position und/oder Bewegung auf und/oder in der Nähe des Berührungsbildschirms 2 herrührend von einem oder mehreren physikalischen Objekten zu einer Geste innerhalb eines Gestensets durch die erste Zuordnungseinheit 11 innerhalb der Gestenerkennungseinheit 10 zugeordnet. Weiterhin wird für die entsprechende Geste eine Tastenkombination oder eine Folge von Tastenkombinationen durch eine zweite Zuordnungseinheit 12 an eine Anwendung 14₁, 14₂, 14₃ übergeben und/oder es wird für die entsprechende Geste eine Funktion innerhalb einer Anwendung 14₁, 14₂, 14₃ durch die zweite Zuordnungseinheit 12 gestartet und/oder die entsprechende Geste wird durch eine zweite Zuordnungseinheit 12 an eine Anwendung 14₁, 14₂, 14₃ übergeben. Dabei wird die durch die erste Zuordnungseinheit 11 erkannte Geste an die zweite Zuordnungseinheit 12 übergeben. Neben einer Tastenkombination oder einer Folge von Tastenkombinationen können zusätzlich Klicke an eine bestimmte Position auf dem Berührungsbildschirm 2 an die entsprechende Anwendung 14₁, 14₂, 14₃ übergeben werden.

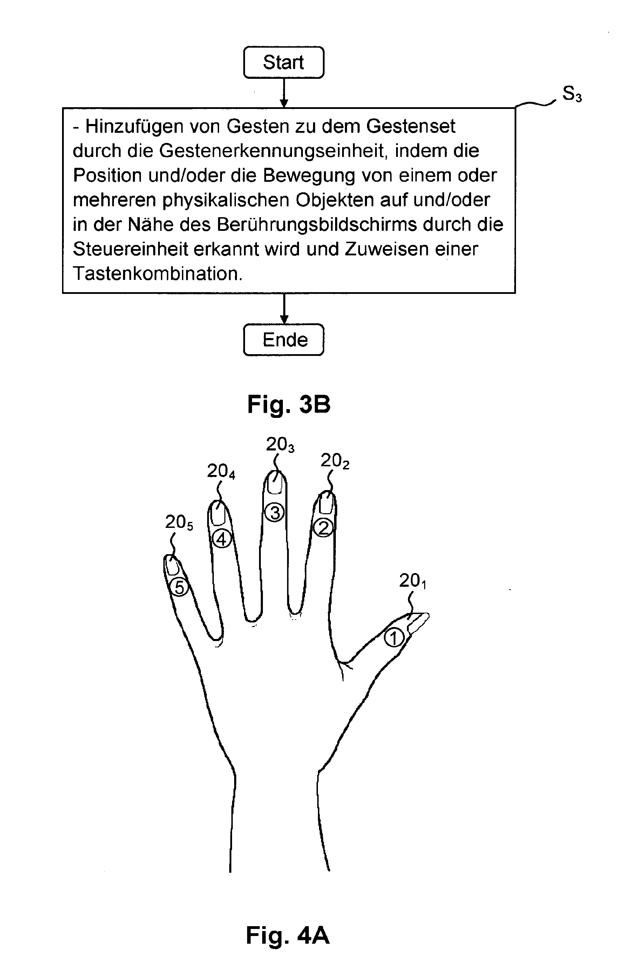

Optional kann der Verfahrensschritt S₃, wie er aus Fig. 3B bekannt ist, nach dem Verfahrensschritt S₁ oder dem Verfahrensschritt S₂ ausgeführt werden. Bei dem erfindungsgemäßen Verfahrensschritt S₃ können Gesten zu dem Gestenset durch die Gestenerkennungseinheit 10 hinzugefügt werden, indem die Position und/oder die Bewegung von einem oder mehreren physikalischen Objekten auf und/oder in der Nähe des Berührungsbildschirms 2 durch die Steuereinheit 8 erkannt wird. Ein Benutzer kann eine Geste, die aus Berührungen und/oder Bewegungen eines oder mehreren Eingabestiften bzw. Finger 20₁, 20₂, 20₃, 20₄, 20₅ besteht, auf den Berührungsbildschirm 2 zeichnen und dieser Geste eine bestimmte Funktionalität zuordnen. Bei dieser Funktionalität kann es sich insbesondere um Tastenkombinationen oder eine Folge von Tastenkombinationen, die durch die zweite Zuordnungseinheit 12 an eine Anwendung 14₁, 14₂, 14₃ übergeben wird, oder um eine Funktion, die durch die zweite Zuordnungseinheit 12 innerhalb einer Anwendung 14₁, 14₂, 14₃ gestartet wird, oder um die Möglichkeit, dass die Geste insgesamt durch die zweite Zuordnungseinheit 12 an eine Anwendung 14₁, 14₂, 14₃ übergeben wird, handeln.

In den nachfolgenden Zeichnungsfiguren wird die Funktionalität verschiedener Gesten eines Gestensets näher erläutert. Die Zeichnungsfiguren 4A bis 4J dienen zur Erläuterung der Notation der Gesten, die in den Zeichnungsfiguren 5 bis 32F näher erläutert werden. Die Gesten können grundsätzlich mit beliebigen Fingern 20₁, 20₂, 20₃, 20₄, 20₅ und auch mit anderen Gegenständen, wie zum Beispiel einem Eingabestift, gezogen werden. Nachfolgend wird vereinfachend davon ausgegangen, dass die Gesten immer mit Fingern 20₁, 20₂, 20₃, 20₄, 20₅ gezeichnet werden. Gesten, die synchron mit zwei Fingern 20₁, 20₂, 20₃, 20₄, 20₅ gezeichnet werden, werden als "diploid" bezeichnet. Analog dazu gibt es auch "triploide" Gesten mit drei Fingern, "tetraploide" Gesten mit vier Fingern und "pentaploide" Gesten mit fünf Fingern. Hierbei wird auch von mehrfach-ploiden Gesten gesprochen. Ploidie ist, wenn nichts anderes angegeben, horizontal. Die Fingerkuppen liegen dabei in etwa horizontal nebeneinander.

Die nachfolgenden Zeichnungsfiguren beinhalten idealisierte Gesten. In der Realisierung sind Toleranzen hinsichtlich Positionen, Ausmaßen, Winkeln, Verhältnissen und Geschwindigkeiten zu berücksichtigen. Aus Gründen der Barrierefreiheit wurde bei allen erfindungsgemäßen Gesten darauf geachtet, dass diese sowohl mit der linken Hand, als auch mit der rechten Hand gezeichnet werden können. Aus Gründen der Globalisierung wurde bei allen erfindungsgemäßen Gesten darauf geachtet, dass diese möglichst international verständlich sind. Manche Gesten, die sich auf bestimmte Bereiche der Bedienoberfläche oder auf bestimmte darauf angezeigte Elemente beziehen, können einen sogenannten "Hotspot" (dt. heißer Punkt), also einen definierten Punkt haben, der festlegt, an welcher Stelle die Geste wirken soll. Auf diesen Sachverhalt wird bei der entsprechenden Geste nochmals gesondert eingegangen. Mit einer "Grundhaltung" ist die natürliche Haltung der Hand beim Auflegen auf eine ebene Fläche mit geringem Tonus gemeint. Alle Finger 20₁, 20₂, 20₃, 20₄, 20₅ sind leicht gebeugt und stehen leicht auseinander.

Fig. 4A zeigt eine linke Hand mit mehreren physikalischen Objekten in Form von Fingern 20₁, 20₂, 20₃, 20₄, 20₅. Zu erkennen ist, dass den Fingern 20₁, 20₂, 20₃, 20₄, 20₅ eingekreiste Zahlen zugeordnet sind. Der Daumen 20₁ hat die Ziffer eins, der Zeigefinger 20₂ die Ziffer zwei, der Mittelfinger 20₃ die Ziffer drei, der Ringfinger 20₄ die Ziffer vier und der kleine Finger 20₅ die Ziffer fünf. In den erfindungsgemäßen Gesten können ebenfalls die Ziffern eins bis fünf aufgeführt sein, die unverbindliche Vorschläge darstellen, mit welchen Fingern 20₁, 20₂, 20₃, 20₄, 20₅ die entsprechenden Teilgesten am besten gezeichnet werden sollen. Die Ziffern, die den Zeichnungsfiguren 4A bis 32F zugeordnet sind, haben nichts mit den Bezugszeichen aus den Zeichnungsfiguren 1 bis 3B zu tun.

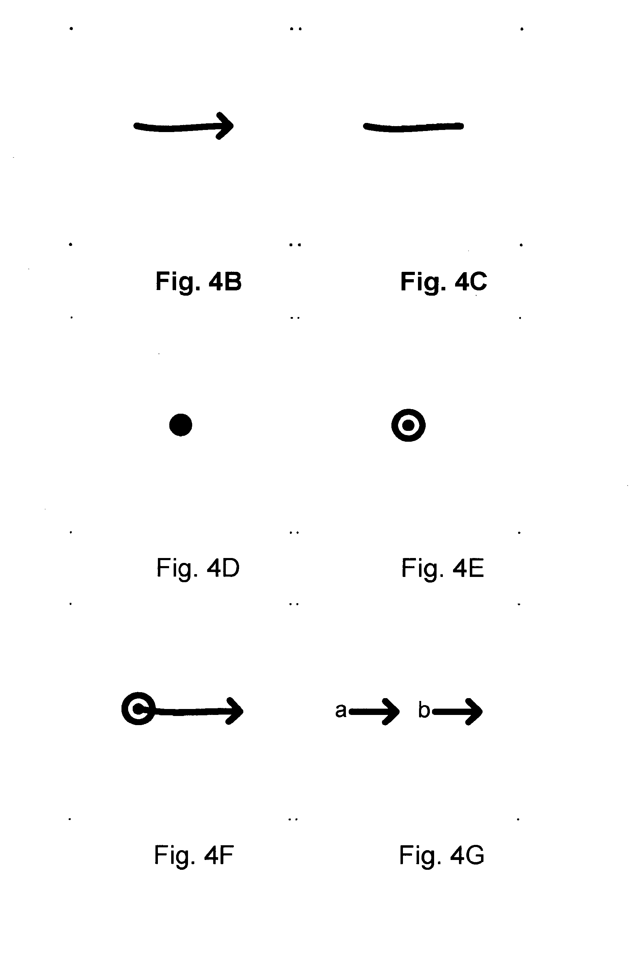

Fig. 4B zeigt ein Beispiel für eine horizontale Strichgeste. Eine Linie wird dabei in Pfeilrichtung nach rechts gezogen.

Fig. 4C zeigt eine horizontale Strichgeste, ohne dass die Richtung in der die Linie gezogen wird eine Rolle spielt.

Fig. 4D zeigt eine Geste, die symbolisiert, dass der Berührungsbildschirm 2 "gedrückt" wird. Dies kann durch einen Finger 20₁, 20₂, 20₃, 20₄, 20₅ erreicht werden, der beispielsweise auf dem Berührungsbildschirm 2 liegen bleibt und sich nicht bewegt. In diesem Fall erkennt die Steuereinheit 8 die Position des Fingers 20₁, 20₂, 20₃, 20₄, 20₅ und übermittelt diese an die erste Zuordnungseinheit 11 innerhalb der Gestenerkennungseinheit 10.

Fig. 4E zeigt eine Geste, die angibt, dass eine Stelle des Berührungsbildschirms 2 "geklickt", "getippt", also mit einem Finger 20₁, 20₂, 20₃, 20₄, 20₅ berührt wird, wobei der Finger 20₁, 20₂, 20₃, 20₄, 20₅ nach sehr kurzer Zeit wieder entfernt wird. Die Klickzeit beträgt bevorzugt weniger als 100 ms. Die Klickzeit kann aber auch eingestellt werden.

Fig. 4F zeigt eine Geste, in der der Startpunkt einer Linie geklickt wird, wobei anschließend die Linie horizontal nach rechts weitergezogen wird.

Fig. 4G zeigt eine Geste, die verschiedene Bewegungen beinhaltet, die in zeitlichem Abstand zueinander ausgeführt werden. Dabei wird zuerst die mit "a" markierte Teilgeste ausgeführt, um anschließend die mit "b" markierte Teilgeste auszuführen. Teilgesten ohne oder mit dem gleichen Buchstaben sind dabei gleichzeitig zu zeichnen. Dies ist beispielsweise bei mehrfach-ploiden Figuren der Fall, die durch das Aufsetzen zweier Fingerkuppen in einer synchronen Bewegung zueinander gezeichnet werden. Eine Teilgeste muss dabei nicht notwendigerweise beendet sein, bevor die nächste Teilgeste beginnt. Insbesondere beim Drücken kann ein Finger 20₁, 20₂, 20₃, 20₄, 20₅ liegenbleiben, wenn die nächste Teilgeste gezeichnet wird. Enthält eine Geste derartige Abfolgemarkierungen, oder sind Teilgesten ohne Abfolgemarkierung, so müssen diese zwar gleichzeitig gezogen werden, können aber zu einem beliebigen Zeitpunkt während des Zeichnens der Geste gezogen werden. Eine Geste kann dabei aus einer oder mehreren Teilgesten bestehen, die mit verschiedenen Fingern 20₁, 20₂, 20₃, 20₄, 20₅ und/oder in zeitlicher Abfolge gezeichnet werden.

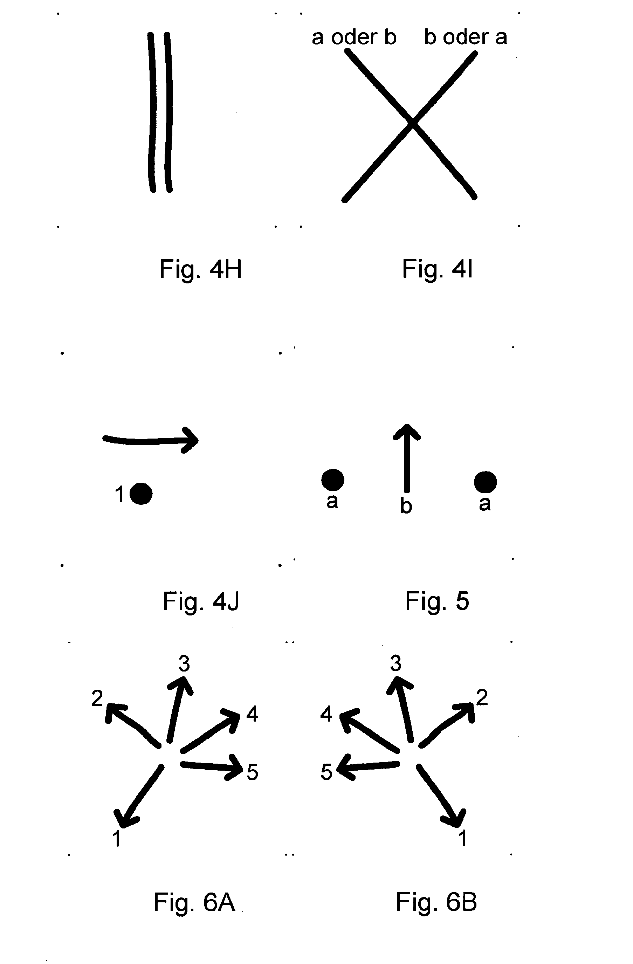

Fig. 4H zeigt eine Geste, die aus einer diploiden Linie besteht, die senkrecht nach unten oder senkrecht nach oben gezogen wird.

Fig. 4I zeigt eine Geste, die aus zwei Teilgesten besteht, die nacheinander gezeichnet werden sollen, wobei die Reihenfolge, mit der die Teilgesten gezeichnet werden sollen, egal ist. Dies wird durch den Vermerk "a oder b", bzw. "b oder a" bei den jeweiligen Teilgesten deutlich gemacht.

Fig. 4J zeigt eine Geste, die aus zwei Teilgesten besteht, die gleichzeitig gezeichnet werden sollen, wobei eine Geste bevorzugt durch den Daumen 20₁ gezeichnet werden soll.

Die nachfolgenden Zeichnungsfiguren 5 bis 32F beinhalten einige Ausführungsbeispiele des Gestensets, welches aus einer Vielzahl von Gesten besteht. Um eine größere Übersichtlichkeit zu bewahren, wird auf das Einfügen von Bezugszeichen verzichtet, zumal die einzelnen Zeichnungsfiguren übersichtlich gehalten sind. Sämtliche Gesten können auf den Berührungsbildschirm 2, der in Fig. 1 dargestellt ist, gezeichnet werden.

Fig. 5 zeigt eine Geste, die dadurch definiert ist, dass zwei Finger 20₁, 20₂, 20₃, 20₄, 20₅, die in etwa horizontal nebeneinander angeordnet sind, den Berührungsbildschirm 2 berühren und dass zwischen den beiden Fingern 20₁, 20₂, 20₃, 20₄, 20₅ eine Linie in etwa senkrecht nach oben gezeichnet wird. Diese Geste soll beispielsweise eine aufgehende Sonne oder einen sprießenden Blütenstiel symbolisieren und kann dazu verwendet werden, eine "Neue Datei" und/oder ein "Neues Objekt" zu erzeugen, wenn die zweite Zuordnungseinheit 12 mit der entsprechenden Anwendung 14₁, 14₂, 14₃ kommuniziert.

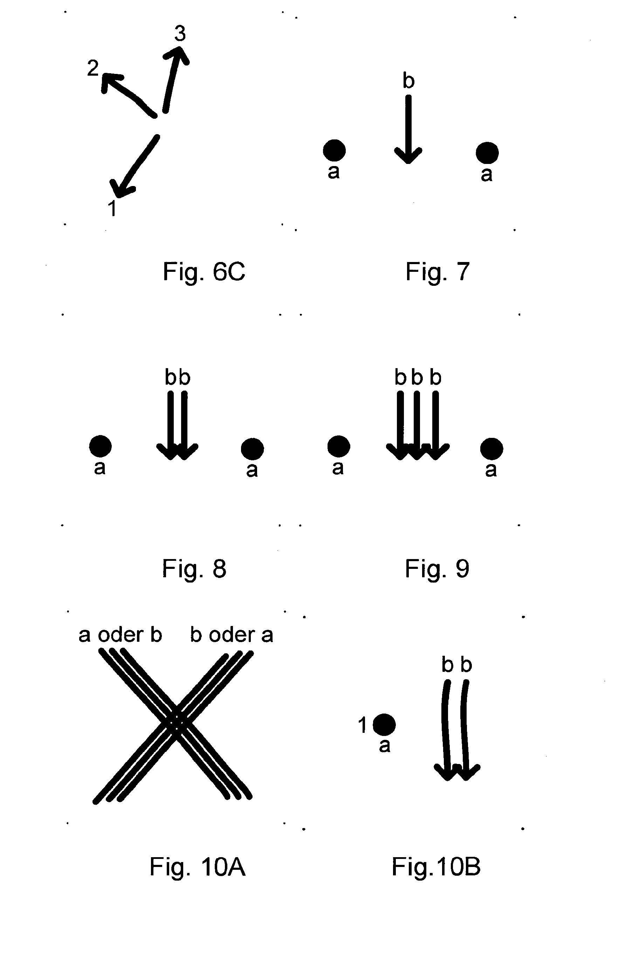

Fig. 6A zeigt eine weitere Geste, die dadurch definiert ist, dass drei oder vier oder fünf Finger 20₁, 20₂, 20₃, 20₄, 20₅ zusammenliegen und den Berührungsbildschirm 2 berühren und sich anschließend spreizend auseinanderbewegen. Fig. 6A zeigt eine Geste, die von einer rechten Hand ausgeführt werden kann. Die Geste kann beispielsweise dazu dienen, um den Befehl zum "Öffnen" von beispielsweise einer Datei zu erzeugen und durch die zweite Zuordnungseinheit 12 an die Anwendung 14₁, 14₂, 14₃ zu übertragen. Fig. 6B zeigt eine weitere Geste, die ebenfalls dadurch definiert ist, dass drei oder vier oder fünf Finger zusammenliegen und den Berührungsbildschirm 2 berühren und sich anschließend spreizend auseinanderbewegen. Diese Geste entspricht der Geste aus Fig. 6A, wobei die Geste aus Fig. 6B von einer linken Hand gezeichnet wird. Fig. 6C zeigt dieselbe Geste, wie sie ebenfalls in Fig. 6A dargestellt ist, mit der Ausnahme, dass statt fünf Fingern 20₁, 20₂, 20₃, 20₄, 20₅ nur drei Finger 20₁, 20₂, 20₃, 20₄, 20₅ zum Zeichnen der Geste verwendet werden.

Fig. 7 zeigt ein weiteres Ausführungsbeispiel einer Geste die dadurch definiert ist, dass zwei Finger 20₁, 20₂, 20₃, 20₄, 20₅, die in etwa horizontal nebeneinander angeordnet sind, den Berührungsbildschirm 2 berühren und dass zwischen den beiden Fingern 20₁, 20₂, 20₃, 20₄, 20₅ eine Linie in etwa senkrecht nach unten gezeichnet wird. Diese Geste kann beispielsweise dazu verwendet werden, um einen Befehl zum "Speichern" zu erzeugen, der durch die zweite Zuordnungseinheit 12 an die entsprechende Anwendung 14₁, 14₂, 14₃ übertragen wird. Dabei werden zuerst die horizontal beabstandeten Finger 20₁, 20₂, 20₃, 20₄, 20₅ nebeneinander angeordnet und erst in einem zweiten Schritt die senkrechte Linie nach unten gezeichnet, wie dies durch die Buchstaben "a" und "b" angedeutet ist.
Fig. 8 zeigt ein weiteres Ausführungsbeispiel einer Geste, die dadurch definiert ist, dass zwei Finger 20₁, 20₂, 20₃, 20₄, 20₅, die in etwa horizontal nebeneinander angeordnet sind, den Berührungsbildschirm 2 berühren und dass zwischen den beiden Fingern 20₁, 20₂, 20₃, 20₄, 20₅ anschließend eine diploide Linie in etwa senkrecht nach unten gezeichnet wird. Diese Geste ähnelt der Geste aus Fig. 7, sodass die Geste aus Fig. 8 beispielsweise dazu verwendet werden kann, einen Befehl zum "Speichern unter" zu erzeugen, der durch die zweite Zuordnungseinheit 12 an die entsprechende Anwendung 14₁, 14₂, 14₃ übertragen wird.

Fig. 9 zeigt ein weiteres Ausführungsbeispiel einer Geste, die dadurch definiert ist, dass zwei Finger 20₁, 20₂, 20₃, 20₄, 20₅, die in etwa horizontal nebeneinander angeordnet sind, den Berührungsbildschirm 2 berühren und dass anschließend zwischen den beiden Fingern 20₁, 20₂, 20₃, 20₄, 20₅ eine triploide Linie in etwa senkrecht nach unten gezeichnet wird. Diese Geste ähnelt ebenfalls den Gesten aus Fig. 7 und Fig. 8, sodass sie beispielsweise dazu verwendet werden kann, um einen Befehl zum "alles Speichern" zu erzeugen und diesen durch die zweite Zuordnungseinheit 12 an die entsprechende Anwendung 14₁, 14₂, 14₃ zu übertragen.

Fig. 10A zeigt ein weiteres Ausführungsbeispiel einer Geste, die dadurch definiert ist, dass ein triploides Andreaskreuz auf dem Berührungsbildschirm 2 gezeichnet wird. Fig. 10B zeigt ein weiteres Ausführungsbeispiel einer Geste, die dadurch definiert ist, dass mit einem Finger 20₁, 20₂, 20₃, 20₄, 20₅, insbesondere dem Daumen 20₁, der Berührungsbildschirm 2 gedrückt und anschließend in etwa horizontal beabstandet davon mit zwei Fingern 20₁, 20₂, 20₃, 20₄, 20₅ eine diploide Linie in etwa senkrecht nach unten gezogen wird. Für den Fall, dass die Geste mit der linken Hand gezeichnet wird, kann die diploide Linie auch links neben der von dem Finger 20₁, 20₂, 20₃, 20₄, 20₅ gedrückten Stelle in etwa senkrecht nach unten gezeichnet werden. Dieser Sachverhalt ist allerdings in Fig. 10B nicht dargestellt. Neben einer diploiden Linie kann auch eine triploide Linie senkrecht nach unten gezeichnet werden. Die Gesten aus Fig. 10A und Fig. 10B können beispielsweise dafür verwendet werden, damit die entsprechende Anwendung 14₁, 14₂, 14₃ den Befehl "Beenden" ausführt.

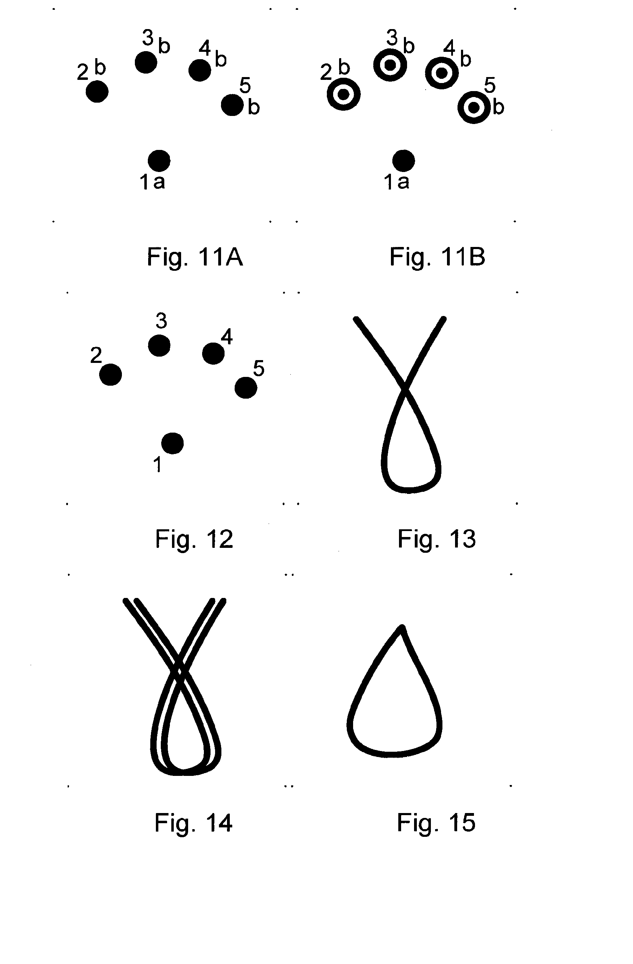

Fig. 11A zeigt ein weiteres Ausführungsbeispiel einer Geste, die dadurch definiert ist, dass ein Finger 20₁, 20₂, 20₃, 20₄, 20₅, insbesondere der Daumen 20₁, auf den Berührungsbildschirm 2 gelegt wird und zeitlich beabstandet dazu zwei weitere oder drei weitere oder vier weitere Finger 20₁, 20₂, 20₃, 20₄, 20₅ in einer Grundhaltung auf den Berührungsbildschirm 2 gelegt werden. Die weiteren Finger 20₁, 20₂, 20₃, 20₄, 20₅ werden bevorzugt zur gleichen Zeit auf den Berührungsbildschirm 2 gelegt. Fig. 11B zeigt ein weiteres Ausführungsbeispiel einer Geste, die dadurch definiert ist, dass ein Finger 20₁, 20₂, 20₃, 20₄, 20₅, insbesondere der Daumen 20₁, auf dem Berührungsbildschirm 2 gelegt wird und zeitlich beabstandet dazu zwei weitere oder drei weitere oder vier weitere Finger 20₁, 20₂, 20₃, 20₄, 20₅ in einer Grundhaltung den Berührungsbildschirm 2 klicken. Die weiteren Finger 20₁, 20₂, 20₃, 20₄, 20₅ klicken bevorzugt zur selben Zeit auf den Berührungsbildschirm 2. Die Gesten aus Fig. 11A und Fig. 11B können dazu verwendet werden, um einen Befehl für eine "Druckvorschau" zu erzeugen, der über die zweite Zuordnungseinheit 12 an die entsprechende Anwendung 14₁, 14₂, 14₃ übertragen wird.

Fig. 12 zeigt ein weiteres Ausführungsbeispiel einer Geste, die dadurch definiert ist, dass ein Finger 20₁, 20₂, 20₃, 20₄, 20₅, insbesondere der Daumen 20₁, und zwei weitere oder drei weitere oder vier weitere Finger 20₁, 20₂, 20₃, 20₄, 20₅ in einer Grundhaltung auf den Berührungsbildschirm 2 gelegt werden. Diese Geste dient beispielsweise dazu, um einen Befehl zum "Drucken" zu erzeugen, der durch die zweite Zuordnungseinheit 12 an die entsprechende Anwendung 14₁, 14₂, 14₃ übertragen wird. Die Finger 20₁, 20₂, 20₃, 20₄, 20₅ liegen hierbei für eine feste Zeit, beispielsweise für maximal eine Sekunde, auf. Diese Geste kann sowohl mit der rechten, als auch mit der linken Hand gezeichnet werden.

Fig. 13 zeigt ein weiteres Ausführungsbeispiel einer Geste, die dadurch definiert ist, dass eine nach unten geschlossene Schleife, die ihren Kreuzungspunkt deutlich unter ihren Enden hat, auf den Berührungsbildschirm 2 gezeichnet wird. Diese Geste dient zum Beispiel dazu, um den Befehl zum "Ausschneiden" zu erzeugen, damit dieser durch die zweite Zuordnungseinheit 12 an die entsprechende Anwendung 14₁, 14₂, 14₃ übertragen wird. Eine solche nach unten geschlossene Schleife kann auch mit einer stilisierten Schere assoziiert werden.

Fig. 14 zeigt ein weiteres Ausführungsbeispiel einer Geste, die dadurch definiert ist, dass eine nach unten geschlossene diploide Schleife, die ihren Kreuzungspunkt deutlich unterhalb ihrer Enden hat, auf den Berührungsbildschirm 2 gezeichnet wird. Die Geste kann beispielsweise dafür verwendet werden, um den Befehl zum "Kopieren" zu erzeugen, der mittels der zweiten Zuordnungseinheit 12 an die entsprechende Anwendung 14₁, 14₂, 14₃ übertragen wird. Davor muss das zu kopierende Objekt ausgewählt bzw. markiert werden.

Fig. 15 zeigt ein weiteres Ausführungsbeispiel einer Geste, die dadurch definiert ist, dass ein in etwa tropfenförmiges Gebilde auf den Berührungsbildschirm 2 gezeichnet wird. Die Geste kann beispielweise dazu verwendet werden, um den Befehl zum "Einfügen" durch die zweite Zuordnungseinheit 12 an die entsprechende Anwendung 14₁, 14₂, 14₃ zu übertragen. Die Spitze des tropfenförmigen Gebildes stellt einen sogenannten "Hotspot" dar. Das einzufügende Objekt wird dabei an die Stelle, an welcher sich die Spitze befindet, eingefügt. Das tropfenförmige Gebilde kann beispielsweise das Fallenlassen des Zwischenspeichers symbolisieren.

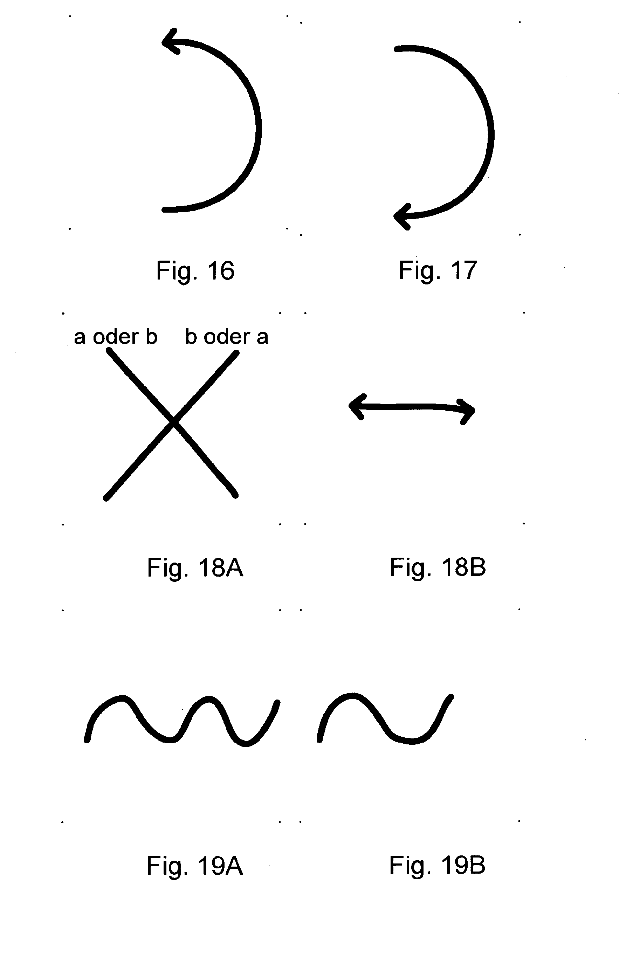

Fig. 16 zeigt ein weiteres Ausführungsbeispiel einer Geste, die dadurch definiert ist, dass ein nach rechts ausgelegter Rundpfeil auf den Berührungsbildschirm 2 von unten nach oben gezeichnet wird. Diese Geste kann beispielsweise dafür verwendet werden, um den Befehl "Rückgängig" zu erzeugen, der durch die zweite Zuordnungseinheit 12 an die entsprechende Anwendung 14₁, 14₂, 14₃ übertragen wird. Die Geste kann damit assoziiert werden, dass die Zeit auf einer Uhr zurückgedreht werden soll.

Fig. 17 zeigt ein weiteres Ausführungsbeispiel einer Geste, die dadurch definiert ist, dass ein nach rechts ausgelegter Rundpfeil auf den Berührungsbildschirm 2 von oben nach unten gezeichnet wird. Die Geste kann dazu dienen, um den Befehl "Wiederherstellen" zu erzeugen, welcher von der zweiten Zuordnungseinheit 12 an die entsprechende Anwendung 14₁, 14₂, 14₃ übertragen wird. Im Gegensatz zu der Geste aus Fig. 16 kann die Geste aus Fig. 17 damit assoziiert werden, dass die Zeit nach vorne gedreht werden soll.

Fig. 18A zeigt ein weiteres Ausführungsbeispiel einer Geste, die dadurch definiert ist, dass ein Andreaskreuz auf den Berührungsbildschirm 2 gezeichnet wird. Fig. 18B zeigt ein weiteres Ausführungsbeispiel einer Geste, die dadurch definiert ist, dass eine in etwa horizontale Linie mehrfach auf den Berührungsbildschirm 2 gezeichnet wird. Die horizontale Linie wird dabei mindestens einmal, bevorzugt eineinhalb Mal, hin und her gefahren. Die Geste aus Fig. 18B kann wie auch die Geste aus Fig. 18A dazu verwendet werden, um den Befehl zum "Löschen" zu erzeugen, der von der zweiten Zuordnungseinheit 12 an die entsprechende Anwendung 14₁, 14₂, 14₃ übertragen wird.

Fig. 19A zeigt ein weiteres Ausführungsbeispiel einer Geste, die dadurch definiert ist, dass eine Wellenlinie auf den Berührungsbildschirm 2 gezeichnet wird. Fig. 19B zeigt ein weiteres Ausführungsbeispiel einer Geste, die dadurch definiert ist, dass eine Periode eines Sinus auf den Berührungsbildschirm 2 gezeichnet wird. Diese Geste ähnelt der Geste aus Fig. 19A und beide können dazu verwendet werden, um den Befehl "Bearbeiten" zu erzeugen, der durch die zweite Zuordnungseinheit 12 an die entsprechende Anwendung 14₁, 14₂, 14₃ übertragen wird.

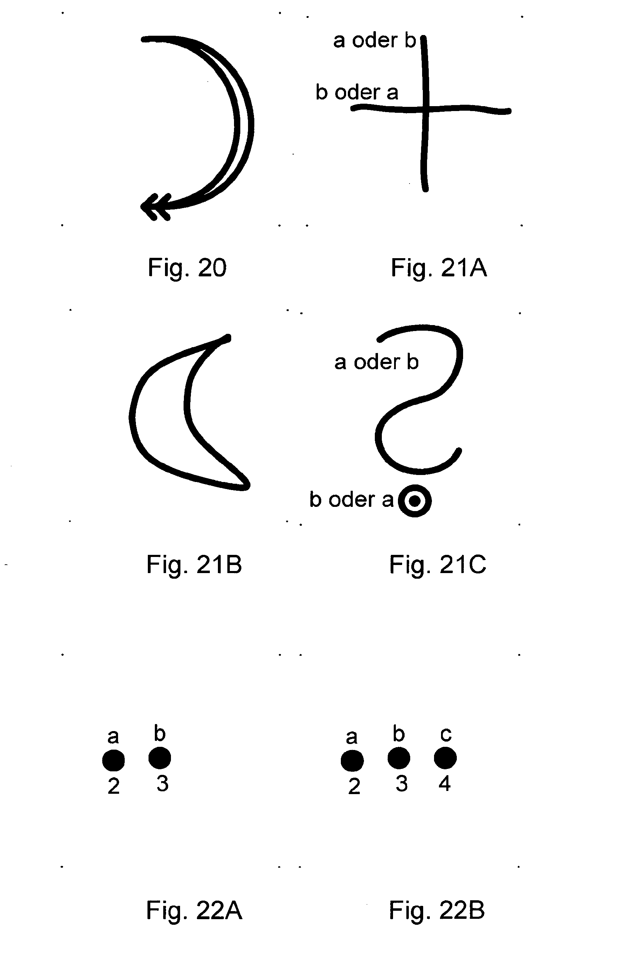

Fig. 20 zeigt ein weiteres Ausführungsbeispiel einer Geste, die dadurch definiert ist, dass ein nach rechts ausgelegter diploider Rundpfeil auf den Berührungsbildschirm 2 von oben nach unten gezeichnet wird. Die Geste kann zum Beispiel dafür verwendet werden, um den Befehl "aktualisieren" zu erzeugen, der durch die zweite Zuordnungseinheit 12 an die entsprechende Anwendung 14₁, 14₂, 14₃ übertragen wird.

In Fig. 21A ist ein weiteres Ausführungsbeispiel einer Geste dargestellt, die dadurch definiert ist, dass ein Kreuz auf dem Berührungsbildschirm 2 gezeichnet wird. Dabei ist die zeitliche Reihenfolge, in welcher die horizontale und die vertikale Linie auf dem Berührungsbildschirm 2 gezeichnet werden, nicht von Bedeutung. Die horizontale bzw. waagrechte Linie und die vertikale bzw. senkrechte Linie schneiden sich in etwa mittig. Fig. 21B zeigt ein weiteres Ausführungsbeispiel einer Geste, die dadurch definiert ist, dass ein Halbmond auf den Berührungsbildschirm 2 gezeichnet wird. Fig. 21C zeigt ein weiteres Ausführungsbeispiel einer Geste, die dadurch definiert ist, dass ein Fragezeichen auf den Berührungsbildschirm 2 gezeichnet wird, wobei die zeitliche Reihenfolge des Punktes oder des gespiegelten "S" nicht von Bedeutung ist. Die Gesten aus den Figuren 21A, 21B und 21C können dazu verwendet werden, um einen Befehl "Hilfe" zu erzeugen, der durch die zweite Zuordnungseinheit 12 an die entsprechende Anwendung 14₁, 14₂, 14₃ übertragen wird.

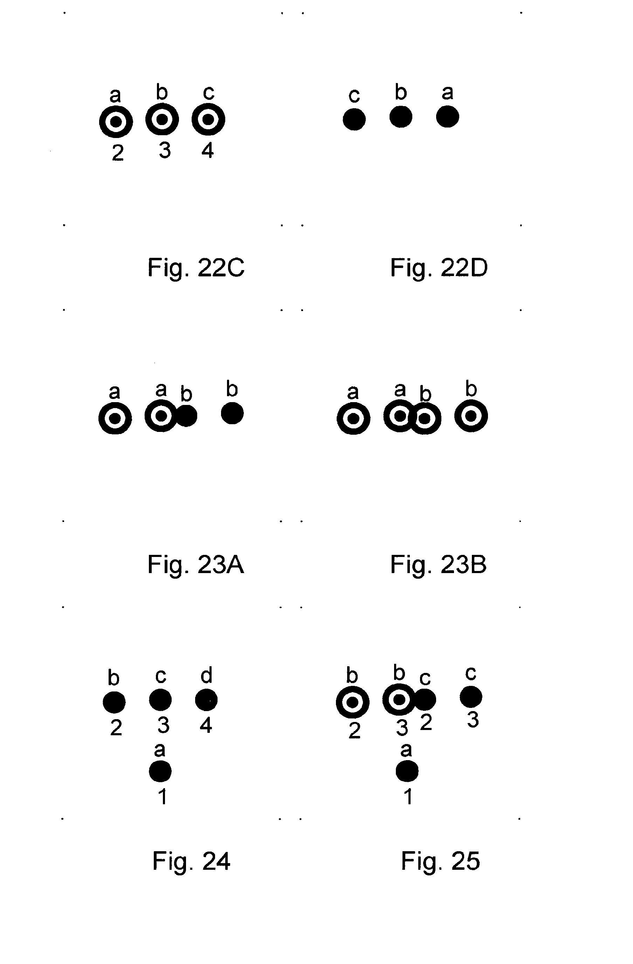

Fig. 22A zeigt ein Ausführungsbeispiel einer Geste, die dadurch definiert ist, dass zwei Finger 20₁, 20₂, 20₃, 20₄, 20₅ in etwa horizontal beabstandet voneinander nacheinander auf den Berührungsbildschirm 2 gelegt werden. Aus Fig. 22B geht ein weiteres Ausführungsbeispiel einer Geste hervor, die dadurch definiert ist, dass drei Finger 20₁, 20₂, 20₃, 20₄, 20₅ nacheinander in etwa horizontal beabstandet voneinander auf den Berührungsbildschirm 2 gelegt werden. Aus Fig. 22C geht ein Ausführungsbeispiel mit einer Geste hervor, die dadurch definiert ist, dass drei Finger 20₁, 20₂, 20₃, 20₄, 20₅ in etwa horizontal beabstandet voneinander nacheinander auf den Berührungsbildschirm 2 gelegt werden und diesen klicken. Fig. 22D zeigt ein Ausführungsbeispiel, das eine Geste beinhaltet, die dadurch definiert ist, dass drei Finger 20₁, 20₂, 20₃, 20₄, 20₅ in etwa horizontal beabstandet voneinander in umgekehrter Reihenfolge zu der Geste aus Fig. 22B auf den Berührungsbildschirm 2 gelegt werden. Insgesamt kann die Geste auch mit fünf Fingern 20₁, 20₂, 20₃, 20₄, 20₅ ausgeführt werden, die nacheinander den Berührungsbildschirm 2 berühren oder klicken. Die Gesten aus den Figuren 22A, 22B, 22C und 22D können verwendet werden, um zum Beispiel den Befehl "Suchen" zu erzeugen, den die zweite Zuordnungseinheit 12 an die entsprechende Anwendung 14₁, 14₂, 14₃ überträgt.

Fig. 23A zeigt ein weiteres Ausführungsbeispiel einer Geste, die dadurch definiert ist, dass zwei in etwa horizontal beabstandete Finger 20₁, 20₂, 20₃, 20₄, 20₅ den Berührungsbildschirm 2 klicken und dass anschließend zwei in etwa horizontal beabstandete Finger 20₁, 20₂, 20₃, 20₄, 20₅ horizontal versetzt dazu den Berührungsbildschirm 2 berühren. Fig. 23B zeigt ein weitere Ausführungsbeispiel mit einer Geste, die dadurch definiert ist, dass zwei in etwa horizontal beabstandete Finger 20₁, 20₂, 20₃, 20₄, 20₅ den Berührungsbildschirm 2 klicken und das anschließend zwei in etwa horizontal beabstandete Finger 20₁, 20₂, 20₃, 20₄, 20₅ versetzt dazu den Berührungsbildschirm 2 klicken. Die Geste kann auch mit fünf Fingern 20₁, 20₂, 20₃, 20₄, 20₅ ausgeführt werden, die den Berührungsbildschirm 2 klicken und anschließend versetzt dazu den Berührungsbildschirm 2 berühren oder klicken. Sowohl die Geste aus Fig. 23A, als auch die Geste aus Fig. 23B können dazu verwendet werden, um den Befehl "Weitersuchen" zu erzeugen, der durch die zweite Zuordnungseinheit 12 an die entsprechende Anwendung 14₁, 14₂, 14₃ übertragen wird.

In Fig. 24 ist ein Ausführungsbeispiel mit einer Geste gezeigt, die dadurch definiert ist, dass ein erster Finger 20₁, 20₂, 20₃, 20₄, 20₅, insbesondere ein Daumen 20₁, den Berührungsbildschirm 2 berührt und anschließend drei Finger 20₁, 20₂, 20₃, 20₄, 20₅ nacheinander in etwa horizontal beabstandet voneinander oberhalb des ersten Fingers 20₁, 20₂, 20₃, 20₄, 20₅ auf den Berührungsbildschirm 2 gelegt werden. Die drei horizontal voneinander beabstandeten Finger 20₁, 20₂, 20₃, 20₄, 20₅ werden bevorzugt nach oberhalb des ersten Fingers 20₁, 20₂, 20₃, 20₄, 20₅ beabstandet positioniert. Die Geste kann auch mit fünf Fingern 20₁, 20₂, 20₃, 20₄, 20₅ ausgeführt werden. Die Geste kann beispielsweise dazu verwendet werden, um den Befehl "Ersetzen" zu erzeugen, der durch die zweite Zuordnungseinheit 12 an die entsprechende Anwendung 14₁, 14₂, 14₃ übertragen wird.

Fig. 25 zeigt ein weiteres Ausführungsbeispiel einer Geste, die dadurch definiert ist, dass ein erster Finger 20₁, 20₂, 20₃, 20₄, 20₅, insbesondere ein Daumen 20₁, den Berührungsbildschirm 2 berührt und anschließend zwei in etwa horizontal beabstandete Finger 20₁, 20₂, 20₃, 20₄, 20₅ oberhalb des ersten Fingers 20₁, 20₂, 20₃, 20₄, 20₅ den Berührungsbildschirm 2 klicken und dass anschließend zwei horizontal beabstandete Finger 20₁, 20₂, 20₃, 20₄, 20₅ horizontal nach rechts versetzt dazu oberhalb des ersten Fingers 20₁, 20₂, 20₃, 20₄, 20₅ den Berührungsbildschirm 2 berühren. Bevorzugt wird der Berührungsbildschirm 2 als erstes mit dem Daumen 20₁ berührt und anschließend dazu mit dem Zeigefinger 20₂ und dem Mittelfinger 20₃ oberhalb des Daumens 20₁ geklickt, bevor der Zeigefinger 20₂ und der Mittelfinger 20₃ horizontal beabstandet dazu auf den Berührungsbildschirm 2 gelegt werden. Diese Geste kann beispielsweise dazu verwendet werden, um den Befehl "Ersetzen und Weitersuchen" zu erzeugen, welcher anschließend durch die zweite Zuordnungseinheit 12 an die entsprechende Anwendung 14₁, 14₂, 14₃ übertragen wird.

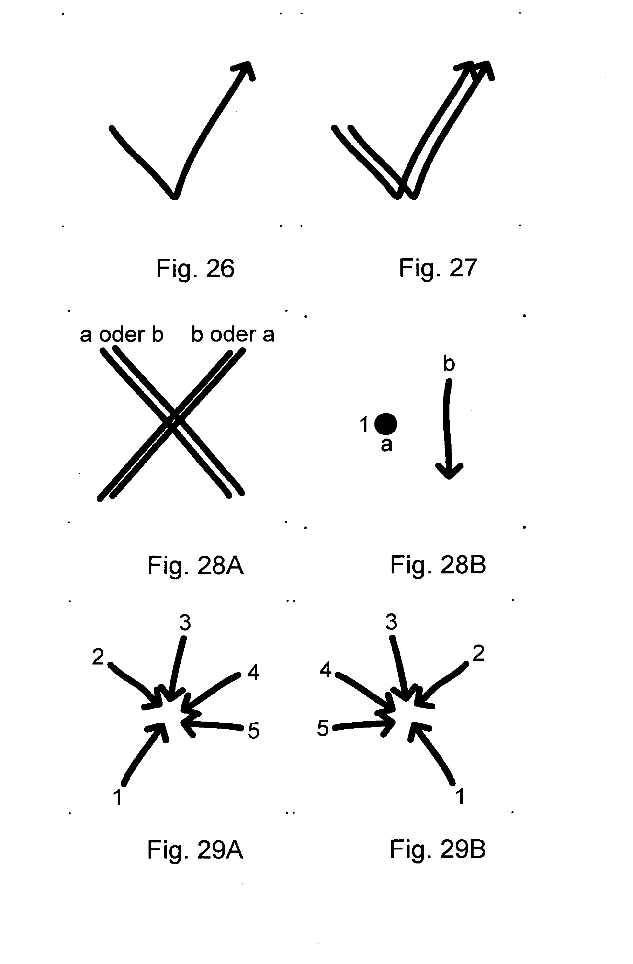

Aus Fig. 26 geht ein weiteres Ausführungsbeispiel hervor, dass eine Geste beinhaltet, die dadurch definiert ist, dass ein Häkchen von links nach rechts auf den Berührungsbildschirm 2 gezeichnet wird. Diese Geste kann beispielsweise dazu verwendet werden, um den Befehl "OK" zu erzeugen, der von einer zweiten Zuordnungseinheit 12 an die entsprechende Anwendung 14₁, 14₂, 14₃ übertragen wird. Der Befehl "OK" kann beispielsweise dazu dienen, um Dialogboxen zu bestätigen.

Aus Fig. 27 ist ein weiteres Ausführungsbeispiel mit einer Geste bekannt, die dadurch definiert ist, dass ein diploides Häkchen von links nach rechts auf dem Berührungsbildschirm 2 gezeichnet wird. Eine solche Geste kann beispielsweise dazu verwendet werden, um den Befehl "Übernehmen" zu erzeugen, welcher durch die zweite Zuordnungseinheit 12 an die entsprechende Anwendung 14₁, 14₂, 14₃ übertragen wird.

Fig. 28A zeigt ein weiteres Ausführungsbeispiel einer Geste, die dadurch definiert ist, dass ein diploides Andreaskreuz auf dem Berührungsbildschirm 2 gezeichnet wird. Fig. 28B zeigt ein weiteres Ausführungsbeispiel einer Geste, die dadurch definiert ist, dass mit einem Finger 20₁, 20₂, 20₃, 20₄, 20₅ der Berührungsbildschirm 2 gedrückt und anschließend in etwa horizontal dazu beabstandet mit einem Finger 20₁, 20₂, 20₃, 20₄, 20₅ eine in etwa senkrechte Linie nach unten gezogen wird. Die Gesten aus Fig. 28A und Fig. 28B können beispielsweise dafür verwendet werden, um den Befehl "Abbrechen" zu erzeugen, der durch die Zuordnungseinheit 12 an die entsprechenden Anwendungen 14₁, 14₂, 14₃ übertragen wird.

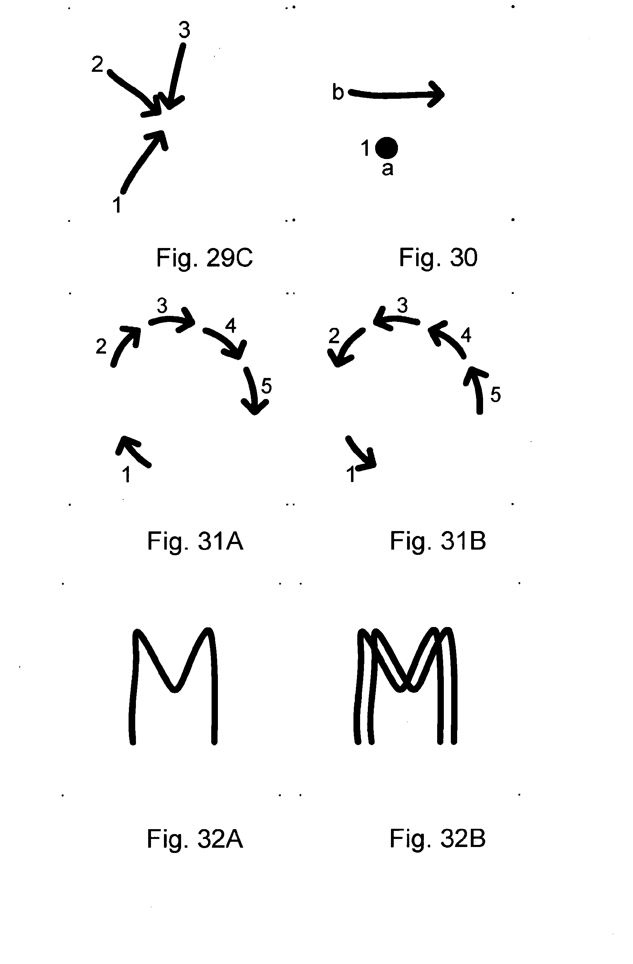

Fig. 29A zeigt ein weiteres Ausführungsbeispiel einer Geste die dadurch definiert ist, dass fünf Finger 20₁, 20₂, 20₃, 20₄, 20₅ die auseinanderliegen und den Berührungsbildschirm 2 berühren, sich anschließend zusammenbewegen. Fig. 29B zeigt dieselbe Geste wie Fig. 29A mit der Ausnahme, dass die Geste aus Fig. 29B mit der linken Hand gezeichnet wird. Fig. 29C zeigt ein weiteres Ausführungsbeispiel einer Geste, die dadurch definiert ist, dass drei Finger 20₁, 20₂, 20₃, 20₄, 20₅ auseinanderliegen und den Berührungsbildschirm 2 berühren und sich anschließend zusammenbewegen. Es können auch vier Finger 20₁, 20₂, 20₃, 20₄, 20₅ sein, die zu Beginn auseinanderliegen und den Berührungsbildschirm 2 berühren und sich anschließend zusammenbewegen. Die Gesten aus Fig. 29A, Fig. 29B und Fig. 29C können dazu verwendet werden, um einen Befehl zum "Schließen" zu erzeugen, der durch die zweite Zuordnungseinheit 12 an die entsprechende Anwendung 14₁, 14₂, 14₃ übertragen wird.

Fig. 30 zeigt ein weiteres Ausführungsbeispiel einer Geste die dadurch definiert ist, dass ein Finger 20₁, 20₂, 20₃, 20₄, 20₅ auf dem Berührungsbildschirm 2 gelegt wird und anschließend darüber eine in etwa horizontale Linie von links nach rechts gezogen wird. Die horizontale Linie kann auch von rechts nach links gezogen werden und es ist ebenfalls möglich, dass die horizontale Linie auch unterhalb des Punktes gezogen wird, der von dem Finger 20₁, 20₂, 20₃, 20₄, 20₅ als erstes berührt wird. Durch die Geste wird beispielsweise der Befehl "Einstellungen/Optionen" erzeugt, der durch die zweite Zuordnungseinheit 12 an die entsprechende Anwendung 14₁, 14₂, 14₃ übertragen wird.

Fig. 31A zeigt ein weiteres Ausführungsbeispiel einer Geste, die dadurch definiert ist, dass zwei bis fünf Finger 20₁, 20₂, 20₃, 20₄, 20₅ auseinander liegen und den Berührungsbildschirm 2 berühren und eine Drehbewegung im Uhrzeigersinn ausführen. Fig. 31B zeigt ein weiteres Ausführungsbeispiel einer Geste die dadurch definiert ist, dass zwei oder drei oder vier oder fünf Finger 20₁, 20₂, 20₃, 20₄, 20₅ auseinanderliegen und den Berührungsbildschirm 2 berühren und eine Drehbewegung entgegen dem Uhrzeigersinn ausführen. Die Gesten aus Fig. 31A und Fig. 31B können dazu verwendet werden, um einen Befehl zum "Drehen" zu erzeugen, der durch die Zuordnungseinheit 12 an die entsprechende Anwendung 14₁, 14₂, 14₃ übertragen wird. In den Ausführungsbeispielen aus den Figuren 31A und 31B ist allerdings nicht dargestellt aber durchaus ebenfalls möglich, dass die Drehbewegung auch nur mit zwei oder drei oder vier Fingern 20₁, 20₂, 20₃, 20₄, 20₅ ausführbar ist.

Schriftzeichen können dagegen durch das Zeichnen des Schriftzeichens mit einem Finger 20₁, 20₂, 20₃, 20₄, 20₅ oder einem entsprechenden Eingabestift eingegeben werden. Hierbei kann zuverlässig zwischen großen und kleinen Buchstaben unterschieden werden. Steuerzeichen, wie zum Beispiel das Alt-Zeichen, können bisher nur sehr umständlich über einen Berührungsbildschirm 2 eingegeben werden. Im Zuge dieser Erfindung ist es möglich, dass Steuerzeichen gefolgt von Schriftzeichen sehr einfach eingegeben werden können. Dies gelingt durch die Eingabe von einem mehrfach-ploiden Schriftzeichen.

Fig. 32A zeigt ein Ausführungsbeispiel, um den großen Buchstaben "M" einzugeben. Die Bewegungsrichtung ist hierbei egal.

Fig. 32B zeigt ein Ausführungsbeispiel einer erfindungsgemäßen Geste durch die ein Steuerzeichen gefolgt von einem Schriftzeichen eingegeben werden kann. Dargestellt ist das diploide Schriftzeichen "M". Eine Geste, die ein diploides Schriftzeichen beinhaltet, kann dahingehend weiterverarbeitet werden, dass ein Strg-Zeichen (Steuerungs-Taste, bzw. Control-Taste) gefolgt von dem Schriftzeichen an die zweite Zuordnungseinheit 12 übergeben wird. Für den Fall dass ein diploides Schriftzeichen mit dem Buchstaben "S" gezeichnet wird, können besonders einfach noch nicht gespeicherte Daten gespeichert werden.

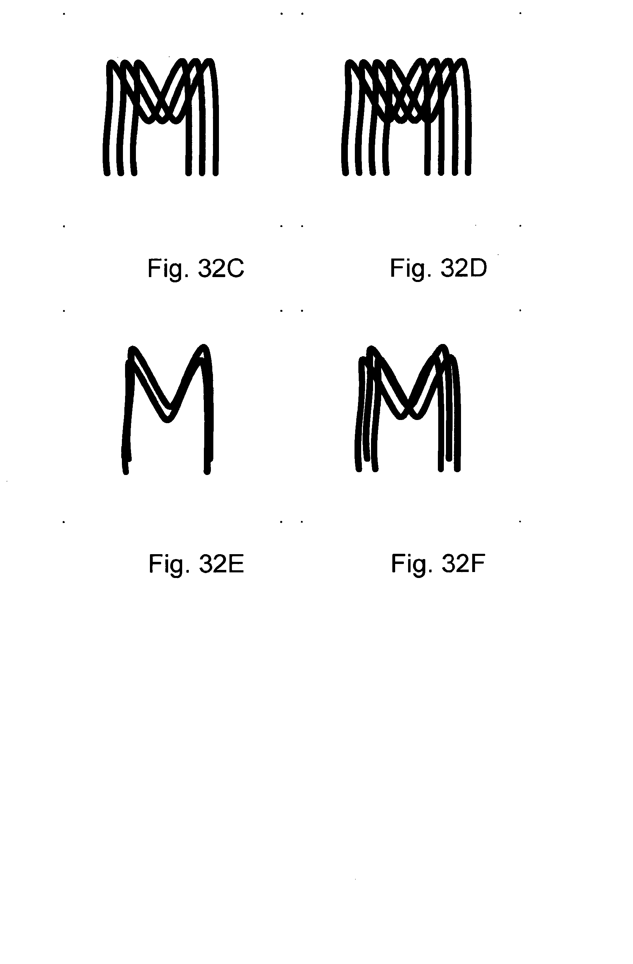

Fig. 32C zeigt ein Ausführungsbeispiel einer erfindungsgemäßen Geste. Die erfindungsgemäße Geste beinhaltet ein triploides Schriftzeichen. Ein triploides Schriftzeichen kann beispielsweise dahingehend interpretiert werden, dass an die zweite Zuordnungseinheit ein Alt-Zeichen gefolgt von dem entsprechenden Schriftzeichen übergeben wird.

Fig. 32D zeigt ein weiteres Ausführungsbeispiel einer erfindungsgemäßen Geste. Die erfindungsgemäße Geste beinhaltet ein tetraploides Schriftzeichen. Für den Fall, dass ein tetraploides Schriftzeichen erkannt wird, wird das Befehl-Zeichen (Befehls-Taste), beispielsweise in Form der Windows-Taste (dt. Fenster-Taste), bzw. Apple-Command-Taste (dt. Apple-Befehls-Taste), gefolgt von dem entsprechenden Schriftzeichen an die zweite Zuordnungseinheit 12 übergeben, die die entsprechende Eingabe an die entsprechende Anwendung 14₁, 14₂, 14₃ weiterleitet.

Fig. 32E zeigt ein weiteres Ausführungsbeispiel einer erfindungsgemäßen Geste. Die erfindungsgemäße Geste beinhaltet ein vertikal diploides Schriftzeichen. In dem Ausführungsbeispiel sind zwei Buchstaben "M" vertikal übereinander dargestellt. Ein solches vertikal diploides Schriftzeichen kann eingegeben werden, indem zwei Finger 20₁, 20₂, 20₃, 20₄, 20₅ übereinander die Konturen des entsprechenden Schriftzeichens nachfahren. Ein solches vertikal diploides Schriftzeichen kann beispielsweise dazu verwendet werden, um ein Shift-Zeichen (Shift-Taste) gefolgt von einem Schriftzeichen durch die zweite Zuordnungseinheit 12 an die entsprechende Anwendung 14₁, 14₂, 14₃ weiterzugeben.

Fig. 32F zeigt ein weiteres Ausführungsbeispiel einer erfindungsgemäßen Geste. Die erfindungsgemäße Geste besteht aus einem gehäufelt triploiden Schriftzeichen. Ein solches gehäufelt triploides Schriftzeichen kann dadurch gezeichnet werden, indem drei Finger 20₁, 20₂, 20₃, 20₄, 20₅ horizontal beabstandet voneinander auf dem Berührungsbildschirm 2 aufgelegt werden, wobei ein Finger 20₁, 20₂, 20₃, 20₄, 20₅ in der Mitte oberhalb der beiden anderen Finger 20₁, 20₂, 20₃, 20₄, 20₅ angeordnet ist und wobei alle drei Finger 20₁, 20₂, 20₃, 20₄, 20₅ das entsprechende Schriftzeichen nachfahren. Die drei Finger 20₁, 20₂, 20₃, 20₄, 20₅ sind dabei im Dreieck zueinander angeordnet. Eine solche Geste kann beispielsweise dazu verwendet werden, um nacheinander ein Strg-Zeichen, ein Alt-Zeichen (Alt-Taste) gefolgt von dem entsprechenden Schriftzeichen über die zweite Zuordnungseinheit 12 an die entsprechende Anwendung 14₁, 14₂, 14₃ weiterzugeben.

Das erfindungsgemäße Verfahren zum Betreiben eines Systems 1, insbesondere eines Messsystems 1 mit einem Berührungsbildschirm 2, eignet sich besonders dafür, um in einem Programm implementiert zur werden, welches auf einem Computer oder einem digitalen Signalprozessor ausgeführt wird. Das Verfahren zum Betreiben eines Systems 1, insbesondere eines Messsystems 1 mit einem Berührungsbildschirm 2, eignet sich ebenfalls besonders, um insbesondere auf einem maschinenlesbaren Träger als Programmcode gespeichert zu werden, damit das Programm später auf einem Computer oder einem digitalen Signalprozessor ausgeführt werden kann.

Bei dem System 1 kann es sich anstatt eines Messsystems 1 auch um ein anderes Computersystem handeln, welches beispielsweise in einem tragbaren Telefon und/oder elektronischen Terminkalender implementiert ist. Generell kann es sich bei dem System 1 um ein System handeln, in dem wenigstens eine zentrale Datenverarbeitungseinheit (CPU) ausgebildet ist.

Das erfindungsgemäße System 1, insbesondere das erfindungsgemäße Messsystem 1, kann auch eine Steuereinheit 8 beinhalten, die mit einer Kamera oder einer stereoskopischen Kamera verbunden ist, wobei die Gestenerkennungseinheit Gesten in den aufgenommenen Bildern erkennen oder wobei die Gestenerkennungseinheit dreidimensionale Gesten in den aufgenommenen stereoskopischen Bildern erkennen und auswerten kann. Dies erlaubt, dass der Benutzer das Messsystem 1 auch aus räumlicher Entfernung zu diesem mit verschiedenen Gesten steuern kann.

## Patentansprüche

1. Verfahren zum Betreiben eines Systems (1) mit einem Berührungsbildschirm (2), einer Steuereinheit (8) für den Berührungsbildschirm (2), einer zentralen Verarbeitungseinheit (9) und einer Gestenerkennungseinheit (10) :
- Erkennen (S₁) einer Position von einem oder mehreren physikalischen Objekten auf und/oder in der Nähe des Berührungsbildschirms (2) durch die Steuereinheit (8) und/oder Erkennen (S₁) einer Bewegung von einem oder mehreren physikalischen Objekten auf und/oder in der Nähe des Berührungsbildschirms (2) durch die Steuereinheit (8) :
- Zuordnen (S₂) der Position und/oder der Bewegung von einem oder mehreren physikalischen Objekten zu einer Geste innerhalb eines Gestensets durch eine erste Zuordnungseinheit (11) innerhalb der Gestenerkennungseinheit (10),
wobei für die Geste eine Tastenkombination oder eine Folge von Tastenkombinationen durch eine zweite Zuordnungseinheit (12) an eine Anwendung (14₁, 14₂, 14₃) übergeben wird und/oder
wobei für die Geste eine Funktion innerhalb einer Anwendung (14₁, 14₂, 14₃) durch die zweite Zuordnungseinheit (12) gestartet wird und/oder
wobei die Geste durch eine zweite Zuordnungseinheit (12) an eine Anwendung (14₁, 14₂, 14₃) übergeben wird,
**dadurch gekennzeichnet, dass** Gesten Schriftzeichen umfassen, und dass ein Schriftzeichen durch eine Bewegung von einem physikalischen Objekt auf dem Berührungsbildschirm (2) eingegeben wird und dass Steuerzeichen gefolgt von Schriftzeichen durch mehrfach-ploide Schriftzeichen eingegeben werden, wobei Gesten, die synchron mit mehreren Fingern gezeichnet werden, als mehrfach-ploide bezeichnet werden.

2. Verfahren nach Anspruch 1,
**gekennzeichnet durch,**
folgenden Verfahrensschritt:
- Hinzufügen (S₃) von Gesten zu dem Gestenset **durch** die Gestenerkennungseinheit (10), indem die Position und/oder die Bewegung von einem oder mehreren physikalischen Objekten auf und/oder in der Nähe des Berührungsbildschirms (2) **durch** die Steuereinheit (8) erkannt wird.

3. Verfahren nach Anspruch 1 oder 2,
**dadurch gekennzeichnet,**
**dass** die durch die zweite Zuordnungseinheit (12) auszuführende Funktion innerhalb der Anwendung (14₁, 14₂, 14₃) eingestellt und verändert werden kann und/oder dass die durch die zweite Zuordnungseinheit (12) an die Anwendung (14₁, 14₂, 14₃) zu übergebende Tastenkombination oder die zu übergebende Folge von Tastenkombinationen eingestellt und verändert werden können, sodass dadurch die Anwendungen (14₁, 14₂, 14₃) einfacher bedient und/oder automatisiert werden können.

4. Verfahren nach einem der vorherigen Ansprüche,
**dadurch gekennzeichnet,**
**dass** ein erstes Steuerzeichen, insbesondere ein Strg-Zeichen gefolgt von einem Schriftzeichen, durch ein diploides Schriftzeichen eingegeben werden kann und/oder dass ein zweites Steuerzeichen, insbesondere ein Alt-Zeichen gefolgt von einem Schriftzeichen, durch ein triploides Schriftzeichen eingegeben werden kann und/oder dass ein drittes Steuerzeichen, insbesondere ein Befehl-Zeichen gefolgt von einem Schriftzeichen, durch ein tetraploides Schriftzeichen eingegeben werden kann und/oder
**dass** ein viertes Steuerzeichen, insbesondere ein Shift-Zeichen gefolgt von einem Schriftzeichen, durch ein vertikal diploides Schriftzeichen eingegeben werden kann und/oder
**dass** ein fünftes Steuerzeichen, insbesondere Strg-Alt-Zeichen gefolgt von einem Schriftzeichen, durch ein gehäufelt triploides Zeichen eingegeben werden kann.

5. Verfahren nach einem der vorherigen Ansprüche,
**dadurch gekennzeichnet,**
**dass** es sich bei dem einen oder den mehreren physikalischen Objekten um einen oder mehrere menschliche Finger (20₁, 20₂, 20₃, 20₄, 20₅) und/oder Eingabestifte handelt.

6. Verfahren nach Anspruch 5,
**dadurch gekennzeichnet,**
**dass** eine Geste dadurch definiert ist, dass zwei Finger (20₁, 20₂, 20₃, 20₄, 20₅), die in etwa horizontal nebeneinander angeordnet sind, den Berührungsbildschirm (2) berühren und dass zwischen den beiden Fingern (20₁, 20₂, 20₃, 20₄, 20₅) eine Linie in etwa senkrecht nach oben gezeichnet wird, wodurch insbesondere der Befehl um eine "Neue Datei" und/oder ein "Neues Objekt" zu erzeugen an die Anwendung (14₁, 14₂, 14₃) übertragen wird.

7. Verfahren nach Anspruch 5 oder 6,
**dadurch gekennzeichnet,**
**dass** eine weitere Geste dadurch definiert ist, dass drei oder vier oder fünf Finger (20₁, 20₂, 20₃, 20₄, 20₅) zusammen liegen und den Berührungsbildschirm (2) berühren und sich anschließend spreizend auseinander bewegen, wodurch insbesondere der Befehl zum "Öffnen" z.B. einer Datei erzeugt und an die Anwendung (14₁, 14₂, 14₃) übertragen wird.

8. Verfahren nach einem der Ansprüche 5 bis 7,
**dadurch gekennzeichnet,**
**dass** eine weitere Geste dadurch definiert ist, dass ein triploides Andreaskreuz auf dem Berührungsbildschirm (2) gezeichnet wird oder dass mit einem Finger (20₁, 20₂, 20₃, 20₄, 20₅) der Berührungsbildschirm (2) gedrückt und anschließend in etwa horizontal beabstandet davon mit zwei oder drei Fingern (20₁, 20₂, 20₃, 20₄, 20₅) eine in etwa diploide oder triploide Linie nach unten gezogen wird, wodurch insbesondere der Befehl zum "Beenden" erzeugt und an die Anwendung (14₁, 14₂, 14₃) übertragen wird.

9. Verfahren nach einem der Ansprüche 5 bis 8,
**dadurch gekennzeichnet,**
**dass** eine weitere Geste dadurch definiert ist, dass zwei Finger (20₁, 20₂, 20₃, 20₄, 20₅), die in etwa horizontal nebeneinander angeordnet sind, den Berührungsbildschirm (2) berühren und dass zwischen den beiden Fingern (20₁, 20₂, 20₃, 20₄, 20₅) eine Linie in etwa senkrecht nach unten gezeichnet wird, wodurch insbesondere der Befehl zum "Speichern" erzeugt und an die Anwendung (14₁, 14₂, 14₃) übertragen wird.

10. Verfahren nach einem der Ansprüche 5 bis 9,
**dadurch gekennzeichnet,**
**dass** eine weitere Geste dadurch definiert ist, dass zwei Finger (20₁, 20₂, 20₃, 20₄, 20₅), die in etwa horizontal nebeneinander angeordnet sind, den Berührungsbildschirm (2) berühren und dass zwischen den beiden Fingern (20₁, 20₂, 20₃, 20₄, 20₅) anschließend eine diploide Linie in etwa senkrecht nach unten gezeichnet wird, wodurch insbesondere der Befehl zum "Speichern unter" erzeugt und an die Anwendung (14₁, 14₂, 14₃) übertragen wird.

11. Verfahren nach einem der Ansprüche 5 bis 10,
**dadurch gekennzeichnet,**
**dass** eine weitere Geste dadurch definiert ist, dass zwei Finger (20₁, 20₂, 20₃, 20₄, 20₅), die in etwa horizontal nebeneinander angeordnet sind, den Berührungsbildschirm (2) berühren und dass anschließend zwischen den beiden Fingern (20₁, 20₂, 20₃, 20₄, 20₅) eine triploide Linie in etwa senkrecht nach unten gezeichnet wird, wodurch insbesondere der Befehl zum "Alles Speichern" erzeugt und an die Anwendung (14₁, 14₂, 14₃) übertragen wird.

12. Verfahren nach einem der Ansprüche 5 bis 11,
**dadurch gekennzeichnet,**
**dass** eine weitere Geste dadurch definiert ist, dass ein Finger (20₁, 20₂, 20₃, 20₄, 20₅), insbesondere ein Daumen (20₁) und zwei weitere oder drei weitere oder vier weitere Finger (20₁, 20₂, 20₃, 20₄, 20₅) in einer Grundhaltung auf den Berührungsbildschirm (2) gelegt werden, wodurch insbesondere der Befehl zum "Drucken" erzeugt und an die Anwendung (14₁, 14₂, 14₃) übertragen wird.

13. Verfahren nach einem der Ansprüche 5 bis 12,
**dadurch gekennzeichnet,**
**dass** eine weitere Geste dadurch definiert ist, dass ein Finger (20₁, 20₂, 20₃, 20₄, 20₅), insbesondere ein Daumen (20₁), auf den Berührungsbildschirm (2) gelegt wird und zeitlich beabstandet dazu zwei weitere oder drei weitere oder vier weitere Finger (20₁, 20₂, 20₃, 20₄, 20₅) in einer Grundhaltung auf den Berührungsbildschirm (2) gelegt werden oder diesen klicken, wodurch insbesondere der Befehl für eine "Druckvorschau" erzeugt und an die Anwendung (14₁, 14₂, 14₃) übertragen wird.

14. Verfahren nach einem der Ansprüche 5 bis 13,
**dadurch gekennzeichnet,**
**dass** eine weitere Geste dadurch definiert ist, dass ein Finger (20₁, 20₂, 20₃, 20₄, 20₅) auf den Berührungsbildschirm (2) gelegt wird und anschließend darüber oder darunter eine in etwa horizontale Linie gezogen wird, wodurch insbesondere der Befehl "Einstellungen/Optionen" erzeugt und an die Anwendung (14₁, 14₂, 14₃) übertragen wird.

15. Verfahren nach einem der Ansprüche 5 bis 14,
**dadurch gekennzeichnet,**
**dass** eine weitere Geste dadurch definiert ist, dass ein oder zwei oder drei Finger (20₁, 20₂, 20₃, 20₄, 20₅) nacheinander in etwa horizontal beabstandet voneinander auf den Berührungsbildschirm (2) gelegt werden oder den Berührungsbildschirm (2) klicken, wodurch insbesondere der Befehl "Suchen" erzeugt und an die Anwendung (14₁, 14₂, 14₃) übertragen wird.

16. Verfahren nach einem der Ansprüche 5 bis 15,
**dadurch gekennzeichnet,**
**dass** eine weitere Geste dadurch definiert ist, dass zwei in etwa horizontal beabstandete Finger (20₁, 20₂, 20₃, 20₄, 20₅) den Berührungsbildschirm (2) klicken und dass anschließend zwei in etwa horizontal beabstandete Finger (20₁, 20₂, 20₃, 20₄, 20₅) horizontal versetzt dazu, den Berührungsbildschirm (2) klicken oder berühren, wodurch insbesondere der Befehl "Weitersuchen" erzeugt und an die Anwendung (14₁, 14₂, 14₃) übertragen wird.

17. Verfahren nach einem der Ansprüche 5 bis 16,
**dadurch gekennzeichnet,**
**dass** eine weitere Geste dadurch definiert ist, dass ein Finger (20₁, 20₂, 20₃, 20₄, 20₅), insbesondere ein Daumen (20₁), den Berührungsbildschirm (2) berührt und anschließend drei Finger (20₁, 20₂, 20₃, 20₄, 20₅) nacheinander in etwa horizontal beabstandet voneinander oberhalb des Fingers (20₁, 20₂, 20₃, 20₄, 20₅) auf den Berührungsbildschirm (2) gelegt werden, wodurch insbesondere der Befehl "Ersetzen" erzeugt und an die Anwendung (14₁, 14₂, 14₃) übertragen wird.

18. Verfahren nach einem der Ansprüche 5 bis 17,
**dadurch gekennzeichnet,**
**dass** eine weitere Geste dadurch definiert ist, dass ein Finger (20₁, 20₂, 20₃, 20₄, 20₅), insbesondere ein Daumen (20₁), den Berührungsbildschirm (2) berührt und anschließend zwei in etwa horizontal beabstandete Finger (20₁, 20₂, 20₃, 20₄, 20₅) oberhalb des Fingers (20₁, 20₂, 20₃, 20₄, 20₅) den Berührungsbildschirm (2) klicken und dass anschließend zwei in etwa horizontal beabstandete Finger (20₁, 20₂, 20₃, 20₄, 20₅) horizontal versetzt dazu oberhalb des Fingers (20₁, 20₂, 20₃, 20₄, 20₅) den Berührungsbildschirm (2) klicken oder berühren, wodurch insbesondere der Befehl "Ersetzen und Weitersuchen" erzeugt und an die Anwendung (14₁, 14₂, 14₃) übertragen wird.

19. Verfahren nach einem der Ansprüche 5 bis 18,
**dadurch gekennzeichnet,**
**dass** eine weitere Geste dadurch definiert ist, dass ein diploides Andreaskreuz auf dem Berührungsbildschirm (2) gezeichnet wird oder dass mit einem Finger (20₁, 20₂, 20₃, 20₄, 20₅) der Berührungsbildschirm (2) gedrückt und in etwa horizontal beabstandet davon mit einem Finger (20₁, 20₂, 20₃, 20₄, 20₅) eine in etwa senkrechte Linie nach unten gezogen wird, wodurch insbesondere der Befehl zum "Abbrechen" erzeugt und an die Anwendung (14₁, 14₂, 14₃) übertragen wird.

20. Verfahren nach einem der Ansprüche 5 bis 19,
**dadurch gekennzeichnet,**
**dass** eine weitere Geste dadurch definiert ist, dass drei oder vier oder fünf Finger (20₁, 20₂, 20₃, 20₄, 20₅) auseinander liegen und den Berührungsbildschirm (2) berühren und sich anschließend zusammen bewegen, wodurch insbesondere der Befehl zum "Schließen" erzeugt und an die Anwendung (14₁, 14₂, 14₃) übertragen wird.

21. Verfahren nach einem der Ansprüche 5 bis 20,
**dadurch gekennzeichnet,**
**dass** eine weitere Geste dadurch definiert ist, dass zwei, oder drei, oder vier oder fünf Finger (20₁, 20₂, 20₃, 20₄, 20₅) auseinander liegen und den Berührungsbildschirm (2) berühren und eine Drehbewegung ausgeführt wird, wodurch insbesondere der Befehl zum "Drehen" erzeugt und an die Anwendung (14₁, 14₂, 14₃) übertragen wird.

22. Verfahren nach einem der vorherigen Ansprüche,
**dadurch gekennzeichnet,**
**dass** eine weitere Geste dadurch definiert ist, dass eine nach unten geschlossene Schleife, die ihren Kreuzungspunkt deutlich unter ihren Enden hat, auf den Berührungsschirm (2) gezeichnet wird, wodurch insbesondere der Befehl zum "Ausschneiden" erzeugt und an die Anwendung übertragen wird und/oder
**dass** eine nach unten geschlossene diploide Schleife, die ihren Kreuzungspunkt deutlich unter ihren Enden hat, auf den Berührungsschirm (2) gezeichnet wird, wodurch insbesondere der Befehl zum "Kopieren" erzeugt und an die Anwendung (14₁, 14₂, 14₃) übertragen wird.

23. Verfahren nach einem der vorherigen Ansprüche,
**dadurch gekennzeichnet,**
**dass** eine weitere Geste dadurch definiert ist, dass ein in etwa tropfenförmiges Gebilde auf den Berührungsbildschirm (2) gezeichnet wird, wodurch insbesondere der Befehl zum "Einfügen" erzeugt und an die Anwendung (14₁, 14₂, 14₃) übertragen wird.

24. Verfahren nach einem der vorherigen Ansprüche,
**dadurch gekennzeichnet,**
**dass** eine weitere Geste dadurch definiert ist, dass eine Wellenlinie oder eine Periode eines Sinus auf den Berührungsbildschirm (2) gezeichnet wird, wodurch insbesondere der Befehl zum "Bearbeiten" erzeugt und an die Anwendung (14₁, 14₂, 14₃) übertragen wird.

25. Verfahren nach einem der vorherigen Ansprüche,
**dadurch gekennzeichnet,**
**dass** eine weitere Geste dadurch definiert ist, dass ein Häkchen auf den Berührungsbildschirm (2) gezeichnet wird, wodurch insbesondere der Befehl für "OK" erzeugt und an die Anwendung (14₁, 14₂, 14₃) übertragen wird.

26. Verfahren nach einem der vorherigen Ansprüche,
**dadurch gekennzeichnet,**
**dass** eine weitere Geste dadurch definiert ist, dass ein diploides Häkchen auf den Berührungsbildschirm (2) gezeichnet wird, wodurch insbesondere der Befehl für "Übernehmen" erzeugt und an die Anwendung (14₁, 14₂, 14₃) übertragen wird.

27. Verfahren nach einem der vorherigen Ansprüche,
**dadurch gekennzeichnet,**
**dass** eine weitere Geste dadurch definiert ist, dass ein nach rechts ausgelegter Rundpfeil auf den Berührungsbildschirm (2) von unten nach oben gezeichnet wird, wodurch insbesondere der Befehl "Rückgängig" erzeugt und an die Anwendung (14₁, 14₂, 14₃) übertragen wird und/oder
**dass** eine weitere Geste dadurch definiert ist, dass ein nach rechts ausgelegter Rundpfeil auf den Berührungsbildschirm (2) von oben nach unten gezeichnet wird, wodurch insbesondere der Befehl "Wiederherstellen" erzeugt und an die Anwendung (14₁, 14₂, 14₃) übertragen wird und/oder
**dass** eine weitere Geste dadurch definiert ist, dass ein nach rechts ausgelegter diploider Rundpfeil auf den Berührungsbildschirm (2) von oben nach unten gezeichnet wird, wodurch insbesondere der Befehl "Aktualisieren" erzeugt und an die Anwendung (14₁, 14₂, 14₃) übertragen wird.

28. Verfahren nach einem der vorherigen Ansprüche,
**dadurch gekennzeichnet,**
**dass** eine weitere Geste dadurch definiert ist, dass ein Andreaskreuz auf den Berührungsbildschirm (2) gezeichnet wird, oder dass eine in etwa horizontale Linie mehrfach auf den Berührungsbildschirm (2) gezeichnet wird, wodurch insbesondere der Befehl "Löschen" erzeugt und an die Anwendung (14₁, 14₂, 14₃) übertragen wird.

29. Verfahren nach einem der vorherigen Ansprüche,
**dadurch gekennzeichnet,**
**dass** eine weitere Geste dadurch definiert ist, dass ein Kreuz, bestehend aus einer in etwa senkrechten und einer in etwa waagrechten Linie, die sich in etwa mittig schneiden und/oder ein Halbmond und/oder ein Fragezeichen auf den Berührungsbildschirm (2) gezeichnet wird, wodurch insbesondere der Befehl "Hilfe" erzeugt und an die Anwendung (14₁, 14₂, 14₃) übertragen wird.

30. Computerprogramm mit Programmcode-Mitteln, um alle Schritte gemäß einem der Ansprüche 1 bis 29 durchführen zu können, wenn das Programm auf einem Computer oder einem digitalen Signalprozessor ausgeführt wird.

31. Computerprogramm-Produkt mit insbesondere auf einem maschinenlesbaren Träger gespeicherten Programmcode-Mitteln, um alle Schritte gemäß einem der Ansprüche 1 bis 29 durchführen zu können, wenn das Programm auf einem Computer oder einem digitalen Signalprozessor ausgeführt wird.

32. Computersystem (1) mit einem Berührungsbildschirm (2), einer Steuereinheit (8) für den Berührungsbildschirm (2), einer zentralen Verarbeitungseinheit (9) und einer Gestenerkennungseinheit (10),
wobei die Steuereinheit (8) eine Position von einem oder mehreren physikalischen Objekten auf und/oder in der Nähe des Berührungsbildschirms(2) erkennt und/oder wobei die Steuereinheit (8) eine Bewegung von einem oder mehreren physikalischen Objekten auf und/oder in der Nähe des Berührungsbildschirms (2) erkennt,
wobei eine erste Zuordnungseinheit (11) innerhalb der Gestenerkennungseinheit (10) die Position und/oder die Bewegung von einem oder mehreren physikalischen Objekten zu einer Geste innerhalb eines Gestensets zuordnet,
wobei eine zweite Zuordnungseinheit (12) für die Geste eine Tastenkombination oder eine Folge von Tastenkombinationen an eine Anwendung (14₁, 14₂, 14₃) übergibt und/oder
wobei eine zweite Zuordnungseinheit (12) für die Geste eine Funktion innerhalb einer Anwendung (14₁, 14₂, 14₃) startet und/oder
wobei eine zweite Zuordnungseinheit (12) die Geste an eine Anwendung (14₁, 14₂, 14₃) übergibt,
**dadurch gekennzeichnet, dass** Gesten Schriftzeichen umfassen, und dass ein Schriftzeichen durch eine Bewegung von einem physikalischen Objekt auf dem Berührungsbildschirm (2) eingegeben wird und dass Steuerzeichen gefolgt von Schriftzeichen durch mehrfach-ploide Schriftzeichen eingegeben werden, wobei Gesten, die synchron mit mehreren Fingern gezeichnet werden, als mehrfach ploide bezeichnet werden.

33. Computersystem nach Anspruch 32,
**dadurch gekennzeichnet,**
**dass** durch die Gestenerkennungseinheit (10) Gesten zu dem Gestenset hinzufügbar sind, indem die Position und/oder die Bewegung von einem oder mehreren physikalischen Objekten auf und/oder in der Nähe des Berührungsbildschirms (2) durch die Steuereinheit (8) erkennbar ist.

34. Computersystem nach Anspruch 32 oder 33,
**dadurch gekennzeichnet,**
**dass** eine oder mehrere Gesten innerhalb des Gestensets einen definierten Punkt haben, der angibt, an welcher Stelle die Geste wirken soll.

## Claims

1. Method for operating a system (1) with a touch screen (2), a control unit (8) for the touch screen (2), a central processing unit (9) and a gesture identification unit (10), comprising:
- identification (S₁) of a position of one or more physical objects on and/or in the vicinity of the touch screen (2) by the control unit (8) and/or identification (S₁) of a movement of one or more physical objects on and/or in the vicinity of the touch screen (2) by the control unit (8);
- assignment (S₂) of the position and/or the movement of one or more physical objects to a gesture within a set of gestures by a first assignment unit (11) within the gesture identification unit (10),
wherein for the gesture a key combination or a sequence of key combinations is passed by a second assignment unit (12) to an application (14₁, 14₂, 14₃) and/or
wherein for the gesture a function within an application (14₁, 14₂, 14₃) is started by the second assignment unit (12) and/or
wherein the gesture is passed by a second assignment unit (12) to an application (14₁, 14₂, 14₃),
**characterised in that**
gestures comprise letters, and **in that** a letter is entered by a movement of a physical object on the touch screen (2) and **in that** control characters followed by letters are entered by multiploid letters, wherein gestures drawn synchronously with a plurality of fingers being designated multiploid.

2. Method according to claim 1,
**characterised by** the following step:
- addition (S₃) of gestures to the set of gestures by the gesture identification unit (10) in that the position and/or the movement of one or more physical objects on and/or in the vicinity of the touch screen (2) is identified by the control unit (8).

3. Method according to claim 1 or 2,
**characterised in that**
the function to be executed by the second assignment unit (12) can be set and changed within the application (14₁, 14₂, 14₃) and/or
**in that** the key combination to be passed by the second assignment unit (12) to the application (14₁, 14₂, 14₃) or the sequence of key combinations to be passed can be set and changed so that as a result the applications (14₁, 14₂, 14₃) can be operated more easily and/or automated.

4. Method according to one of the preceding claims,
**characterised in that**
a first control character, in particular a Ctrl character followed by a letter, can be entered by a diploid letter and/or
**in that** a second control character, in particular an Alt character followed by a letter, can be entered by a triploid letter and/or
**in that** a third control character, in particular a command character followed by a letter, can be entered by a tetraploid letter and/or
**in that** a fourth control character, in particular a shift character followed by a letter, can be entered by a vertically diploid letter and/or
**in that** a fifth control character, in particular a Ctrl-Alt character followed by a letter, can be entered by a cumulatively triploid character.

5. Method according to one of the preceding claims,
**characterised in that**
the one or more physical objects are one or more human fingers (20₁, 20₂, 20₃, 20₄, 20₅) and/or styli.

6. Method according to claim 5,
**characterised in that**
a gesture is defined **in that** two fingers (20₁, 20₂, 20₃, 20₄, 20₅) arranged roughly horizontally next to one another touch the touch screen (2) and **in that** between the two fingers (20₁, 20₂, 20₃, 20₄, 20₅) a line is drawn roughly vertically upwards, through which in particular the command to generate a "New File" and/or a "New Object" is transmitted to the application (14₁, 14₂, 14₃).

7. Method according to claim 5 or 6,
**characterised in that**
a further gesture is defined **in that** three or four or five fingers (20₁, 20₂, 20₃, 20₄, 20₅) lie together and touch the touch screen (2) and then move spreading apart, through which in particular the command to "Open" a file for example is generated and transmitted to the application (14₁, 14₂, 14₃).

8. Method according to one of claims 5 to 7,
**characterised in that**
a further gesture is defined **in that** a triploid cross of St. Andrew is drawn on the touch screen (2) or **in that** the touch screen (2) is pressed with a finger (20₁, 20₂, 20₃, 20₄, 20₅) and then roughly horizontally distant therefrom a diploid or triploid line is drawn downwards with two or three fingers (20₁, 20₂, 20₃, 20₄, 20₅), through which in particular the command to "End" is generated and transmitted to the application (14₁, 14₂, 14₃).

9. Method according to one of claims 5 to 8,
**characterised in that**
a further gesture is defined **in that** two fingers (20₁, 20₂, 20₃, 20₄, 20₅) arranged roughly horizontally next to one another touch the touch screen (2) and **in that** a line is drawn roughly perpendicularly downwards between the two fingers (20₁, 20₂, 20₃, 20₄, 20₅), through which in particular the command to "Store" is generated and transmitted to the application (14₁, 14₂, 14₃).

10. Method according to one claims 5 to 9,
**characterised in that**
a further gesture is defined **in that** two fingers (20₁, 20₂, 20₃, 20₄, 20₅) arranged roughly horizontally next to one another touch the touch screen (2) and **in that** then a diploid line is drawn roughly perpendicularly downwards between the two fingers (20₁, 20₂, 20₃, 20₄, 20₅), through which in particular the command to "Store Under" is generated and transmitted to the application (14₁, 14₂, 14₃).

11. Method according to one of claims 5 to 10,
**characterised in that**
a further gesture is defined **in that** two fingers (20₁, 20₂, 20₃, 20₄, 20₅) arranged roughly horizontally next to one another touch the touch screen (2) and **in that** then a triploid line is drawn roughly perpendicularly downwards between the two fingers (20₁, 20₂, 20₃, 20₄, 20₅), through which in particular the command to "Store Everything" is generated and transmitted to the application (14₁, 14₂, 14₃).

12. Method according to one of claims 5 to 11,
**characterised in that**
a further gesture is defined **in that** a finger (20₁, 20₂, 20₃, 20₄, 20₅), in particular a thumb (20₁) and two further or three further or four further fingers (20₁, 20₂, 20₃, 20₄, 20₅) are placed on the touch screen (2) in a basic attitude, through which in particular the command to "Print" is generated and transmitted to the application (14₁, 14₂, 14₃).

13. Method according to one of claims 5 to 12,
**characterised in that**
a further gesture is defined **in that** a finger (20₁, 20₂, 20₃, 20₄, 20₅), in particular a thumb (20₁), is placed on the touch screen (2) and at a time thereafter two further or three further or four further fingers (20₁, 20₂, 20₃, 20₄, 20₅) are placed on the touch screen (2) in a basic attitude or click the latter, through which in particular the command for a "Print Preview" is generated and transmitted to the application (14₁, 14₂, 14₃).

14. Method according to one of claims 5 to 13,
**characterised in that**
a further gesture is defined **in that** a finger (20₁, 20₂, 20₃, 20₄, 20₅) is placed on the touch screen (2) and then a roughly horizontal line is drawn over it or under it, through which in particular the command for "Settings/Options" is generated and transmitted to the application (14₁, 14₂, 14₃).

15. Method according to one of claims 5 to 14,
**characterised in that**
a further gesture is defined **in that** one or two or three fingers (20₁, 20₂, 20₃, 20₄, 20₅) are placed successively roughly horizontally a distance apart from one another on the touch screen (2) or click the touch screen (2), through which in particular the command to "Search" is generated and transmitted to the application (14₁, 14₂, 14₃).

16. Method according to one of claims 5 to 15,
**characterised in that**
a further gesture is defined **in that** two roughly horizontally spaced fingers (20₁, 20₂, 20₃, 20₄, 20₅) click the touch screen (2) and **in that** then two roughly horizontally spaced fingers (20₁, 20₂, 20₃, 20₄, 20₅) offset horizontally thereto click or touch the touch screen (2), through which in particular the command to "Continue Search" is generated and transmitted to the application (14₁, 14₂, 14₃).

17. Method according to one of claims 5 to 16,
**characterised in that**
a further gesture is defined **in that** a finger (20₁, 20₂, 20₃, 20₄, 20₅), in particular a thumb (20₁), touches the touch screen (2) and then three fingers (20₁, 20₂, 20₃, 20₄, 20₅) are placed successively roughly horizontally spaced apart from one another above the finger (20₁, 20₂, 20₃, 20₄, 20₅) on the touch screen (2), through which in particular the command to "Replace" is generated and transmitted to the application (14₁, 14₂, 14₃).

18. Method according to one of claims 5 to 17,
**characterised in that**
a further gesture is defined **in that** a finger (20₁, 20₂, 20₃, 20₄, 20₅), in particular a thumb (20₁), touches the touch screen (2) and then two roughly horizontally spaced fingers (20₁, 20₂, 20₃, 20₄, 20₅) above the finger (20₁, 20₂, 20₃, 20₄, 20₅) click the touch screen (2) and **in that** then two roughly horizontally spaced fingers (20₁, 20₂, 20₃, 20₄, 20₅) horizontally offset thereto above the finger (20₁, 20₂, 20₃, 20₄, 20₅) click or touch the touch screen (2), through which in particular the command to "Replace and Continue Search" is generated and transmitted to the application (14₁, 14₂, 14₃).

19. Method according to one of claims 5 to 18,
**characterised in that**
a further gesture is defined **in that** a diploid cross of St. Andrew is drawn on the touch screen (2) or **in that** the touch screen (2) is pressed with a finger (20₁, 20₂, 20₃, 20₄, 20₅) and a roughly vertical line is drawn downwards a roughly horizontal distance therefrom with a finger (20₁, 20₂, 20₃, 20₄, 20₅), through which in particular the command to "Abort" is generated and transmitted to the application (14₁, 14₂, 14₃).

20. Method according to one of claims 5 to 19,
**characterised in that**
a further gesture is defined **in that** three or four or five fingers (20₁, 20₂, 20₃, 20₄, 20₅) lie spread apart and touch the touch screen (2) and then move together, through which in particular the command to "Close" is generated and transmitted to the application (14₁, 14₂, 14₃).

21. Method according to one of claims 5 to 20,
**characterised in that**
a further gesture is defined **in that** two, or three, or four or five fingers (20₁, 20₂, 20₃, 20₄, 20₅) lie spread apart and touch the touch screen (2) and a rotating movement is executed, through which in particular the command to "Rotate" is generated and transmitted to the application (14₁, 14₂, 14₃).

22. Method according to one of the preceding claims,
**characterised in that**
a further gesture is defined **in that** a downwardly closed loop, which has its point of intersection clearly below its ends, is drawn on the touch screen (2), through which in particular the command to "Cut Out" is generated and transmitted to the application and/or
**in that** a downwardly closed diploid loop, which has its point of intersection clearly below its ends, is drawn on the touch screen (2), through which in particular the command to "Copy" is generated and transmitted to the application (14₁, 14₂, 14₃).

23. Method according to one of the preceding claims,
**characterised in that**
a further gesture is defined **in that** a roughly drop-shaped image is drawn on the touch screen (2), through which in particular the command to "Insert" is generated and transmitted to the application (14₁, 14₂, 14₃).

24. Method according to one of the preceding claims,
**characterised in that**
a further gesture is defined **in that** a wavy line or a period of a sine wave is drawn on the touch screen (2), through which in particular the command to "Process" is generated and transmitted to the application (14₁, 14₂, 14₃).

25. Method according to one of the preceding claims,
**characterised in that**
a further gesture is defined **in that** a tick is drawn on the touch screen (2), through which in particular the command for "OK" is generated and transmitted to the application (14₁, 14₂, 14₃).

26. Method according to one of the preceding claims,
**characterised in that**
a further gesture is defined **in that** a diploid tick is drawn on the touch screen (2), through which in particular the command for "Take Over" is generated and transmitted to the application (14₁, 14₂, 14₃).

27. Method according to one of the preceding claims,
**characterised in that**
a further gesture is defined **in that** a round arrow extending to the right is drawn on the touch screen (2) from the bottom to the top, through which in particular the command to "Undo" is generated and transmitted to the application (14₁, 14₂, 14₃) and/or
**in that** a further gesture is defined **in that** a round arrow extending to the right is drawn on the touch screen (2) from the top to the bottom, through which in particular the command to "Restore" is generated and transmitted to the application (14₁, 14₂, 14₃) and/or
**in that** a further gesture is defined **in that** a diploid round arrow extending to the right is drawn on the touch screen (2) from the top to the bottom, through which in particular the command to "Update" is generated and transmitted to the application (14₁, 14₂, 14₃).

28. Method according to one of the preceding claims,
**characterised in that**
a further gesture is defined **in that** a cross of St. Andrews is drawn on the touch screen (2), or **in that** a roughly horizontal line is drawn multiple times on the touch screen (2), through which in particular the command to "Delete" is generated and transmitted to the application (14₁, 14₂, 14₃).

29. Method according to one of the preceding claims,
**characterised in that**
a further gesture is defined **in that** a cross, consisting of a roughly perpendicular and a roughly horizontal line which intersect roughly in the middle and/or a half moon and/or a question mark is drawn on the touch screen (2), through which in particular the command "Help" is generated and transmitted to the application (14₁, 14₂, 14₃).

30. Computer programme with programme code means in order to be able to carry out all the steps according to one of the claims 1 to 29 when the programme is run on a computer or a digital signal processor.

31. Computer programme product with in particular programme code means stored on a machine-readable medium in order to be able to carry out all the steps according to one of claims 1 to 29 when the programme is run on a computer or a digital signal processor.

32. Computer system (1) with a touch screen (2), a control unit (8) for the touch screen (2), a central processing unit (9) and a gesture identification unit (10),
wherein the control unit (8) identifies a position of one or more physical objects on and/or in the vicinity of the touch screen (2) and/or
wherein the control unit (8) identifies a movement of one or more physical objects on and/or in the vicinity of the touch screen (2),
wherein a first assignment unit (11) within the gesture identification unit (10) assigns the position and/or the movement of one or more physical objects to a gesture within a set of gestures,
wherein a second assignment unit (12) for the gesture passes a key combination or a sequence of key combinations to an application (14₁, 14₂, 14₃) and/or
wherein a second assignment unit (12) for the gesture starts a function within an application (14₁, 14₂, 14₃) and/or
wherein a second assignment unit (12) passes the gesture to an application (14₁, 14₂, 14₃),
**characterised in that**
gestures comprise letters, and **in that** a letter is entered by a movement of a physical object on the touch screen (2) and **in that** control characters followed by letters are entered by multiploid letters, wherein gestures drawn synchronously with a plurality of fingers being designated multiploid.

33. Computer system according to claim 32,
**characterised in that**
through **the** gesture identification unit (10) gestures can be **added** to the set of gestures **in that** the position and/or the movement of one or more physical objects on and/or in the vicinity of the touch screen (2) is identifiable by the control unit (8).

34. Computer system according to claim 32 or 33,
**characterised in that**
one or more gestures within the set of gestures have a defined spot which indicates the location at which the gesture is to be effective.

## Revendications

1. Procédé pour actionner un système (1) comportant un écran tactile (2), une unité de commande (8) pour l'écran tactile (2), une unité de traitement centrale (9), et une unité de reconnaissance de gestes (10) :
- reconnaître (S₁) une position d'un ou de plusieurs objets physiques sur et/ou à proximité de l'écran tactile (2) grâce à l'unité de commande (8) et/ou
reconnaître (S₁) un mouvement d'un ou de plusieurs objets physiques sur et/ou à proximité de l'écran tactile (2) grâce à l'unité de commande (8) ;
- attribuer (S₂) la position et/ou le mouvement d'un ou de plusieurs objets physiques à un geste dans un ensemble de gestes à un geste à l'intérieur d'un ensemble de gestes grâce à une première unité d'attribution (11) dans l'unité de reconnaissance de gestes (10),
dans lequel, pour le geste, une combinaison de touches ou une suite de combinaisons de touches est délivrée par une seconde unité d'attribution (12) à une application (14₁, 14₂, 14₃) et/ou
dans lequel, pour le geste, une fonction dans une application (14₁, 14₂, 14₃) est commencée par la seconde unité d'attribution (12) et/ou
dans lequel le geste est transmis par la seconde unité d'attribution (12) à une application (14₁, 14₂, 14₃), **caractérisé en ce que** les gestes comprennent des caractères, et
**en ce qu'**un caractère est saisi par un mouvement d'un objet physique sur l'écran tactile (2) et
**en ce qu'**un caractère de commande suivi par un caractère est saisi par des caractères polyploïdes, où les gestes, qui sont tracés de façon synchrone avec plusieurs doigts, sont décrits comme étant polyploïdes.

2. Procédé selon la revendication 1, **caractérisé par** l'étape de procédé suivante :
- l'ajout (S₃) de gestes à l'ensemble de gestes par l'unité de reconnaissance de gestes (10), tandis que la position et/ou le mouvement d'un ou de plusieurs objets physiques sur et/ou à proximité de l'écran tactile (2) est reconnu par l'unité de commande (8).

3. Procédé selon la revendication 1 ou 2, **caractérisé en ce que**
la fonction réalisée par la seconde unité d'attribution (12) peut être réglée et modifiée à l'intérieur de l'application (14₁, 14₂, 14₃) et/ou
**en ce que** la combinaison de touches à délivrer par la seconde unité d'attribution (12) à l'application (14₁, 14₂, 14₃) ou la suite de combinaisons de touches à délivrer peuvent être réglées et modifiées, de sorte qu'ainsi les applications (14₁, 14₂, 14₃) peuvent être actionnées et/ou automatisées plus simplement.

4. Procédé selon l'une des revendications précédentes, **caractérisé en ce que**
une première touche de commande, en particulier une touche Strg suivie par un caractère, peut être saisie par un caractère diploïde et/ou
**en ce qu'**une seconde touche de commande, en particulier une touche Alt suivie par un caractère, peut être saisie par un caractère triploïde et/ou
**en ce qu'**une troisième touche de commande, en particulier une touche d'ordre suivie par un caractère, peut être saisie par un caractère tétraploïde et/ou
**en ce qu'**une quatrième touche de commande, en particulier une touche Shift suivie par un caractère, peut être saisi par un caractère diploïde verticale et/ou
**en ce qu'**une cinquième touche de commande, en particulier une touche Strg-Alt suivie par un caractère peut être saisie par un caractère fréquemment triploïde.

5. Procédé selon l'une des revendications précédentes, **caractérisé en ce que**
concernant un ou plusieurs objets physiques, il s'agit d'un ou de plusieurs doigts humains (20₁, 20₂, 20₃, 20₄, 20₅) et/ou de stylets.

6. Procédé selon la revendication 5, **caractérisé en ce que**
un geste est défini **en ce que** deux doigts (20₁, 20₂, 20₃, 20₄, 20₅), qui sont disposés l'un à côté de l'autre pratiquement horizontalement, touchent l'écran tactile (2) et **en ce que**, entre les deux doigts (20₁, 20₂, 20₃, 20₄, 20₅), une ligne est tracée vers le haut pratiquement verticalement, moyennant quoi en particulier l'ordre de générer "Nouveau Fichier" et/ou "Nouvel Objet" est transmis à l'application (14₁, 14₂, 14₃).

7. Procédé selon la revendication 5 ou 6, **caractérisé en ce que**
un autre geste est défini **en ce que** trois ou quatre ou cinq doigts (20₁, 20₂, 20₃, 20₄, 20₅) se trouvent côte à côte et touchent l'écran tactile (2) et se déplacent ensuite écartés, moyennant quoi l'ordre "Ouvrir" par exemple un fichier est généré et transmis à l'application (14₁, 14₂, 14₃).

8. Procédé selon l'une des revendications 5 à 7, **caractérisé en ce que**
un autre geste est défini **en ce qu'**une croix en X triploïde est tracée sur l'écran tactile (2) ou **en ce qu'**avec un doigt (20₁, 20₂, 20₃, 20₄, 20₅) l'écran tactile (2) est touché et ensuite à une distance sensiblement horizontale de celui-ci, une ligne sensiblement diploïde ou triploïde est tracée vers le bas avec deux ou trois doigts (20₁, 20₂, 20₃, 20₄, 20₅), moyennant quoi l'ordre "Terminer" est généré en particulier et transmis à l'application (14₁, 14₂, 14₃).

9. Procédé selon l'une des revendications 5 à 8, **caractérisé en ce que**
un autre geste est défini **en ce que** deux doigts (20₁, 20₂, 20₃, 20₄, 20₅), qui sont disposés l'un à côté de l'autre sensiblement horizontalement, touchent l'écran tactile (2) et **en ce qu'**entre les deux doigts (20₁, 20₂, 20₃, 20₄, 20₅), une ligne est tracée vers le bas sensiblement verticalement, moyennant quoi l'ordre "Enregistrer" est en particulier généré et transmis à l'application (14₁, 14₂, 14₃).

10. Procédé selon l'une des revendications 5 à 9, **caractérisé en ce que**
un autre geste est défini **en ce que** deux doigts (20₁, 20₂, 20₃, 20₄, 20₅), qui sont disposés l'un à côté de l'autre sensiblement horizontalement, touchent l'écran tactile (2) et **en ce que**, entre les deux doigts (20₁, 20₂, 20₃, 20₄, 20₅), une ligne diploïde est ensuite tracée vers le bas sensiblement verticalement, moyennant quoi l'ordre "Enregistrer sous" est en particulier généré et transmis à l'application (14₁, 14₂, 14₃).

11. Procédé selon l'une des revendications 5 à 10, **caractérisé en ce que**
un autre geste est défini **en ce que** deux doigts (20₁, 20₂, 20₃, 20₄, 20₅), qui sont disposés l'un à côté de l'autre sensiblement horizontalement, touchent l'écran tactile (2) et **en ce que**, ensuite, entre les deux doigts (20₁, 20₂, 20₃, 20₄, 20₅), une ligne triploïde est tracée vers le bas sensiblement verticalement, moyennant quoi l'ordre "Enregistrer tout" est en particulier généré et transmis à l'application (14₁, 14₂, 14₃).

12. Procédé selon l'une des revendications 5 à 11, **caractérisé en ce que**
un autre geste est défini **en ce qu'**un doigt (20₁, 20₂, 20₃, 20₄, 20₅), en particulier un pouce (20₁) ou deux autres ou trois autres ou quatre autres doigts (20₁, 20₂, 20₃, 20₄, 20₅) sont placés dans une position fondamentale sur l'écran tactile (2), moyennant quoi l'ordre "Imprimer" est en particulier généré et transmis à l'application (14₁, 14₂, 14₃).

13. Procédé selon l'une des revendications 5 à 12, **caractérisé en ce que**
un autre geste est défini **en ce qu'**un doigt (20₁, 20₂, 20₃, 20₄, 20₅), en particulier un pouce (20₁), est placé sur l'écran tactile (2) et, temporellement écartés de celui-ci, deux autres ou trois autres ou quatre autres doigts (20₁, 20₂, 20₃, 20₄, 20₅) sont placés dans une position fondamentale sur l'écran tactile (2) ou cliquent celui-ci, moyennant quoi l'ordre pour un "Aperçu avant impression" est généré en particulier et transmis à l'application (14₁, 14₂, 14₃).

14. Procédé selon l'une des revendications 5 à 13, **caractérisé en ce que**
un autre geste est défini **en ce qu'**un doigt (20₁, 20₂, 20₃, 20₄, 20₅) est placé sur l'écran tactile (2) et ensuite une ligne sensiblement horizontale est tracée au-dessus ou en dessous, moyennant quoi l'ordre "Réglages/Options" est en particulier généré et transmis à l'application (14₁, 14₂, 14₃).

15. Procédé selon l'une des revendications 5 à 14, **caractérisé en ce que**
un autre geste est défini **en ce qu'**un ou deux ou trois doigts (20₁, 20₂, 20₃, 20₄, 20₅) sont placés l'un après l'autre écartés les uns des autres sensiblement horizontalement sur l'écran tactile (2) ou cliquent l'écran tactile (2), moyennant quoi l'ordre "Chercher" est en particulier généré et transmis à l'application (14₁, 14₂, 14₃).

16. Procédé selon l'une des revendications 5 à 15, **caractérisé en ce que**
un autre geste est défini, **en ce que** deux doigts écartés sensiblement horizontalement (20₁, 20₂, 20₃, 20₄, 20₅) cliquent l'écran tactile (2) et **en ce qu'**ensuite deux doigts écartés sensiblement horizontalement (20₁, 20₂, 20₃, 20₄, 20₅) décalés horizontalement cliquent ou touchent l'écran tactile (2), moyennant quoi l'ordre "Rechercher" est en particulier généré et transmis à l'application (14₁, 14₂, 14₃)).

17. Procédé selon l'une des revendications 5 à 16, **caractérisé en ce que**
un autre geste est défini **en ce qu'**un doigt (20₁, 20₂, 20₃, 20₄, 20₅), en particulier un pouce (20₁), touche l'écran tactile (2) et ensuite trois doigts (20₁, 20₂, 20₃, 20₄, 20₅) sont placés l'un après l'autre et écartés les uns des autres sensiblement horizontalement au-dessus du doigt (20₁, 20₂, 20₃, 20₄, 20₅) sur l'écran tactile (2), moyennant quoi l'ordre "Remplacer" est en particulier généré et transmis à l'application (14₁, 14₂, 14₃).

18. Procédé selon l'une des revendications 5 à 17, **caractérisé en ce que**
un autre geste est défini **en ce qu'**un doigt (20₁, 20₂, 20₃, 20₄, 20₅), en particulier un pouce (20₁), touche l'écran tactile (2) et ensuite deux doigts écartés sensiblement horizontalement (20₁, 20₂, 20₃, 20₄, 20₅) au-dessus du doigt (20₁, 20₂, 20₃, 20₄, 20₅) cliquent l'écran tactile (2) et **en ce qu'**ensuite deux doigts écartés sensiblement horizontalement (20₁, 20₂, 20₃, 20₄, 20₅) décalés horizontalement au-dessus du doigt (20₁, 20₂, 20₃, 20₄, 20₅) cliquent ou touchent l'écran tactile (2), moyennant quoi l'ordre "Remplacer et rechercher" est en particulier généré et transmis à l'application (14₁, 14₂, 14₃).

19. Procédé selon l'une des revendications 5 à 18, **caractérisé en ce que**
un autre geste est défini **en ce qu'**une croix en X diploïde est tracée sur l'écran tactile (2) ou **en ce qu'**avec un doigt (20₁, 20₂, 20₃, 20₄, 20₅) l'écran tactile (2) est touché et, écarté sensiblement horizontalement de celui-ci, une ligne sensiblement verticale est tracée vers le bas avec un doigt (20₁, 20₂, 20₃, 20₄, 20₅), moyennant quoi l'ordre "Annuler" est en particulier généré et transmis à l'application (14₁, 14₂, 14₃).

20. Procédé selon l'une des revendications 5 à 19, **caractérisé en ce que**
un autre geste est défini **en ce que** trois ou quatre ou cinq doigts (20₁, 20₂, 20₃, 20₄, 20₅) sont distants les uns des autres et touchent l'écran tactile (2) et se déplacent ensuite conjointement, moyennant quoi l'ordre "Fermer" est en particulier généré et transmis à l'application (14₁, 14₂, 14₃).

21. Procédé selon l'une des revendications 5 à 20, **caractérisé en ce que**
un autre geste est défini, **en ce que** deux ou trois, ou quatre ou cinq doigts (20₁, 20₂, 20₃, 20₄, 20₅) sont distants les uns des autres et touchent l'écran tactile (2) et un mouvement de rotation est effectué, moyennant quoi l'ordre "Pivoter" est en particulier généré et transmis à l'application (14₁, 14₂, 14₃).

22. Procédé selon l'une des revendications précédentes, **caractérisé en ce que**
un autre geste est défini **en ce qu'**une boucle fermée vers le bas, qui présente son point d'intersection clairement sous ses extrémités, est tracée sur l'écran tactile (2), moyennant quoi l'ordre "Couper" est en particulier généré et transmis à l'application et/ou
**en ce qu'**une boucle diploïde fermée vers le bas, qui possède son point d'intersection clairement sous ses extrémités, est tracée sur l'écran tactile (2), moyennant quoi l'ordre "Copier" est en particulier généré et transmis à l'application (14₁, 14₂, 14₃).

23. Procédé selon l'une des revendications précédentes, **caractérisé en ce que**
un autre geste est défini, **en ce qu'**une figure en forme de goutte est tracée sur l'écran tactile (2), moyennant quoi l'ordre "Insérer" est en particulier généré et transmis à l'application (14₁, 14₂, 14₃).

24. Procédé selon l'une des revendications précédentes, **caractérisé en ce que**
un autre geste est défini, **en ce qu'**une ligne sinusoïdale ou une période d'une fonction sinus est tracée sur l'écran tactile (2), moyennant quoi l'ordre "Editer" est en particulier généré et transmis à l'application (14₁, 14₂, 14₃).

25. Procédé selon l'une des revendications précédentes, **caractérisé en ce que**
un autre geste est défini, **en ce qu'**un crochet est tracé sur l'écran tactile (2), moyennant quoi l'ordre "OK" est en particulier généré et transmis à l'application (14₁, 14₂, 14₃).

26. Procédé selon l'une des revendications précédentes, **caractérisé en ce que**
un autre geste est défini **en ce qu'**un crochet diploïde est tracé sur l'écran tactile (2), moyennant quoi l'ordre "Transférer" est en particulier généré et transmis à l'application (14₁, 14₂, 14₃).

27. Procédé selon l'une des revendications précédentes, **caractérisé en ce que**
un autre geste est défini, **en ce qu'**une flèche courbée vers la droite est tracée sur l'écran tactile (2) de bas en haut, moyennant quoi l'ordre "Vers l'arrière" est en particulier généré et transmis à l'application (14₁, 14₂, 14₃) et/ou
**en ce qu'**un autre geste est défini, **en ce qu'**une flèche courbée vers la droite est tracée sur l'écran tactile (2) de haut en bas, moyennant quoi l'ordre "Reproduire" est en particulier généré et transmis à l'application (14₁, 14₂, 14₃) et/ou
**en ce qu'**un autre geste est défini, **en ce qu'**une flèche courbée diploïde vers la droite est tracée sur l'écran tactile (2) de haut en bas, moyennant quoi l'ordre "Actualiser" est en particulier généré et transmis à l'application (14₁, 14₂, 14₃).

28. Procédé selon l'une des revendications précédentes, **caractérisé en ce que**
un autre geste est défini, **en ce qu'**une croix en X est tracée sur l'écran tactile (2), ou **en ce qu'**une ligne sensiblement horizontale est tracée plusieurs fois sur l'écran tactile (2), moyennant quoi l'ordre "Effacer" est en particulier généré et transmis à l'application (14₁, 14₂, 14₃).

29. Procédé selon l'une des revendications précédentes, **caractérisé en ce que**
un autre geste est défini, **en ce qu'**une croix, constituée d'une ligne sensiblement verticale et d'une ligne sensiblement horizontale, qui se coupent sensiblement au milieu, et/ou une demi-lune et/ou un point d'interrogation est tracé(e) sur l'écran tactile (2), moyennant quoi l'ordre "Aide" est en particulier généré et transmis à l'application (14₁, 14₂, 14₃).

30. Programme informatique comportant des moyens de code de programme, afin de pouvoir réaliser toutes les étapes selon l'une des revendications 1 à 29, lorsque le programme est exécuté sur un ordinateur ou sur un processeur de signal numérique.

31. Produit de programme informatique comportant en particulier des moyens de code de programme mémorisés sur un support pouvant être lu par une machine, afin de pouvoir réaliser toutes les étapes selon l'une des revendications 1 à 29, lorsque le programme est exécuté sur un ordinateur ou sur un processeur de signal numérique.

32. Système informatique (1) comportant un écran tactile (2), une unité de commande (8) pour l'écran tactile (2), une unité de traitement centrale (9) et une unité de reconnaissance de geste (10),
dans lequel l'unité de commande (8) reconnaît une position d'un ou de plusieurs objets physiques sur et/ou à proximité de l'écran tactile (2) et/ou
dans lequel l'unité de commande (8) reconnaît un mouvement d'un ou de plusieurs objets physiques sur et/ou à proximité de l'écran tactile (2),
dans lequel une première unité d'attribution (11) à l'intérieur de l'unité de reconnaissance de gestes (10) attribue la position et/ou le mouvement d'un ou de plusieurs objets physiques à un geste à l'intérieur d'un ensemble de gestes,
dans lequel une seconde unité d'attribution (12) délivre pour le geste une combinaison de touches ou une suite de combinaisons de touches à une application (14₁, 14₂, 14₃) et/ou
dans lequel une seconde unité d'attribution (12) commence pour le geste une fonction à l'intérieur d'une application (14₁, 14₂, 14₃) et/ou
dans lequel une seconde unité d'attribution (12) délivre le geste à une application (14₁, 14₂, 14₃),
**caractérisé en ce que** les gestes comprennent des caractères, et
**en ce qu'**un caractère est saisi par un mouvement d'un objet physique sur l'écran tactile (2) et
**en ce que** des touches de commande suivies par des caractères sont saisies par des caractères polyploïdes, dans lequel les gestes, qui sont tracés de façon synchrone avec plusieurs doigts, sont décrits comme étant polyploïdes.

33. Système informatique selon la revendication 32, **caractérisé en ce que**
grâce à l'unité de reconnaissance de gestes (10), des gestes peuvent être ajoutés à l'ensemble de gestes, ou la position et/ou le mouvement d'un ou de plusieurs objets physiques sur et/ou à proximité de l'écran tactile (2) peut être reconnu(e) par l'unité de commande (8).

34. Système informatique selon la revendication 32 ou 33, **caractérisé en ce qu'**un ou plusieurs gestes à l'intérieur de l'ensemble de gestes ont un point défini, qui indique, à quel endroit le geste doit s'exercer.
